(19) Europäisches Patentamt
European Patent Office
Office européen des brevets

(11) **EP 1 164 712 A1**

(12) **EUROPEAN PATENT APPLICATION**
published in accordance with Art. 158(3) EPC

(43) Date of publication:
**19.12.2001 Bulletin 2001/51**

(51) Int Cl.⁷: **H04B 3/23**, H04M 1/60

(21) Application number: **00981723.0**

(22) Date of filing: **14.12.2000**

(86) International application number:
**PCT/JP00/08863**

(87) International publication number:
**WO 01/54296 (26.07.2001 Gazette 2001/30)**

(84) Designated Contracting States:
**AT BE CH CY DE DK ES FI FR GB GR IE IT LI LU MC NL PT SE TR**

(30) Priority: **19.01.2000 JP 2000010411**

(71) Applicant: **MITSUBISHI DENKI KABUSHIKI KAISHA**
**Tokyo 100-8310 (JP)**

(72) Inventors:
• **TAKAHASHI, Shinya**
**Mitsubishi Denki KabushikiKaisha**
**Chiyoda-ku, Tokyo 100-83 10 (JP)**
• **KAJIYAMA,Ikuo**
**Mitsubishi Electr.Engineering Co.Ltd**
**Chiyoda-ku, Tokyo 100-0004 (JP)**

(74) Representative: **Pfenning, Meinig & Partner GbR**
**Mozartstrasse 17**
**80336 München (DE)**

(54) **SOUND COMMUNICATION DEVICE AND ECHO PROCESSOR**

(57) A voice communication device has a control CPU for outputting a speaker amplification value corresponding to volume on a speaker which is adjusted by a terminal user by using a volume control unit, and an echo processing unit for reducing an echo equivalent to output voice, which is obtained by amplifying a received input signal demodulated and voice-decoded according to the speaker amplification value output from the control CPU and outputting the received input signal from the speaker and is mixed with a transmitting input signal input through a microphone, according to the speaker amplification value. Therefore, the echo can be properly removed.

FIG.2

## Description

TECHNICAL FIELD

The present invention relates generally to a voice communication device such as an on-vehicle telephone or a portable visual telephone, and more particularly to an echo processing device and an echo processing processor in which an echo included in a transmitting speech signal due to the mixing of output voice output from a speaker with input voice input through a microphone is reduced.

BACKGROUND ART

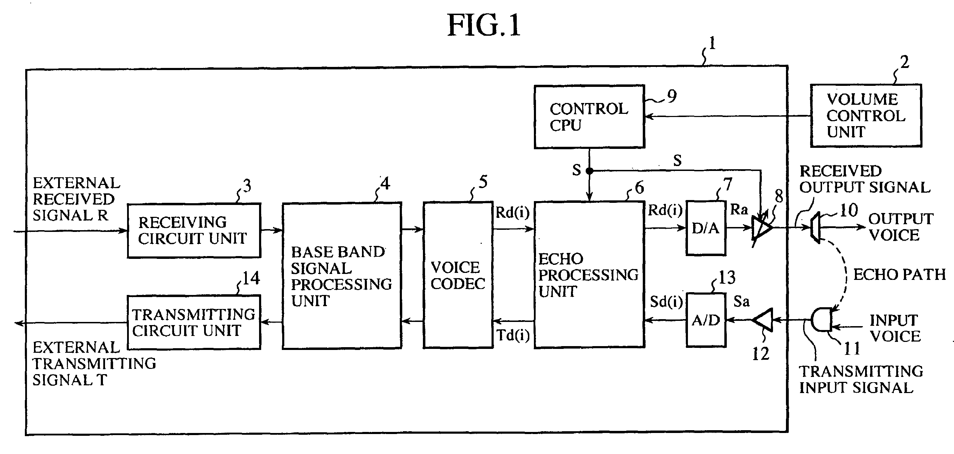

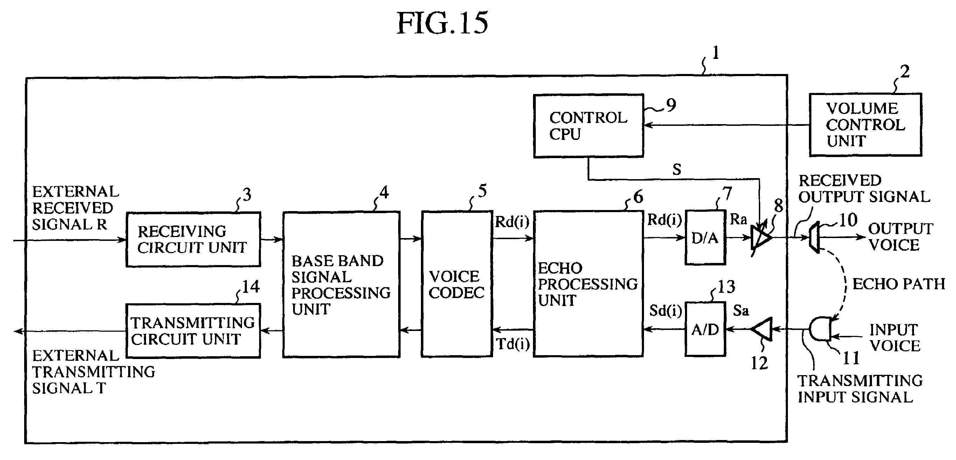

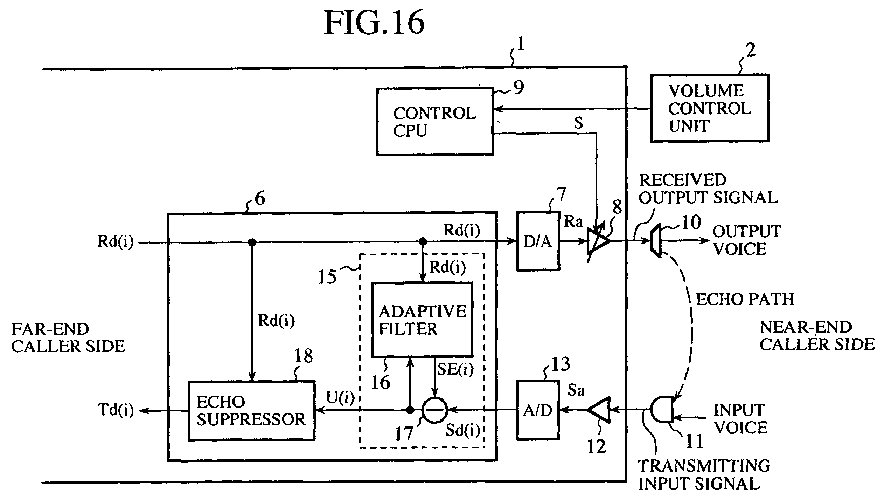

Fig. 15 is a block diagram showing the configuration of a conventional voice communication device, and Fig. 16 is a block diagram showing an echo processing unit arranged in the conventional voice communication device shown in Fig. 15 and peripheral units. In Fig. 15, 1 indicates a conventional voice communication device. 2 indicates a volume control unit. 3 indicates a receiving circuit unit. 4 indicates a base band signal processing unit. 5 indicates a voice codec (coder-decoder). 6 indicates an echo processing unit. 7 indicates a D/A converter. 8 indicates a speaker amplifier. 9 indicates a control CPU. 10 indicates a speaker. 11 indicates a microphone. 12 indicates a microphone amplifier. 13 indicates an A/D converter. 14 indicates a transmitting circuit unit. Next, the configuration and operation of the conventional voice communication device will be described with reference to Fig. 15.

A near-end caller using the conventional voice communication device 1, or a terminal user, adjusts the volume on the speaker 10 (hereinafter, called speaker volume) by using the volume control unit 2. An external received signal R, which is transmitted from a far-end caller, or a person on the other end of the line, and is received in the conventional voice communication device 1, is converted into a digital signal of an intermediate frequency band in the receiving circuit unit 3 and is demodulated in the base band signal processing unit 4, and the voice decoding process is performed for the external received signal R in the voice codec 5 to obtain a received input signal Rd(i). Thereafter, the received input signal Rd(i) is output to the D/A converter 7 through the echo processing unit 6.

In the D/A converter 7, the received input signal Rd(i) is converted into an analog signal Ra and is output to the speaker amplifier 8, for example, formed of an operation amplifier. Also, a speaker amplification value corresponding to the speaker volume, which is adjusted by the terminal user by using the volume control unit 2, is output to the speaker amplifier 8 through the control CPU 9. In the speaker amplifier 8, the analog signal Ra is amplified according to the speaker amplification value output from the control CPU 9, and the amplified analog signal Ra is output to the speaker 10 as a received output signal. Thereafter, output voice is output from the speaker 10 to the outside at the speaker volume desired by the terminal user.

Also, input voice given by the terminal user is input to the conventional voice communication device 1 through the microphone 11. Also, the output voice output from the speaker 10 is input to the microphone 11 as an echo in addition to the input voice of the terminal user while the output voice is deformed according to an acoustic transmission characteristic of a path between the speaker 10 and the microphone 11. The path, through which the output voice output from the speaker 10 is input to the microphone 11, is called an echo path. A transmitting input signal Sa including the echo is input to the A/D converter 13 through the microphone amplifier 12 as an analog signal Sa, is converted into a signal Sd(i) in the A/D converter 13 and is output to the echo processing unit 6.

The configuration of the echo processing unit 6 is shown in Fig. 16. In Fig. 16, 15 indicates an echo canceller. 16 indicates an adaptive filter. 17 indicates a subtracting unit. 18 indicates an echo suppressor. The received input signal Rd(i) input from the voice codec 5 to the echo processing unit 6 are transmitted to both the echo canceller 15 and the echo suppressor 18. Also, the received input signal Rd(i) is transmitted through the echo processing unit 6 and is output to the D/A converter 7. In the echo canceller 15, a pseudo echo SE(i) similar to the echo included in the signal Sd(i) is synthesized, and a residual signal U(i) not including the echo is obtained by subtracting the pseudo echo SE(i) from the signal Sd(i). The residual signal U(i) is input to the adaptive filter 16.

In the adaptive filter 16, the acoustic transmission characteristic of the echo path between the speaker 10 and the microphone 11 is estimated by using both the received input signal Rd(i) output from the voice codec 5 and the echo-removed residual signal U(i), filter coefficients h(n) are calculated each time the acoustic transmission characteristic is estimated, the pseudo echo SE(i) is produced from both the received input signal Rd(i) and the filter coefficients h(n), and the pseudo echo SE(i) is output to the subtracting unit 17. In the subtracting unit 17, the signal Sd (i) output from the A/D converter 13 is received, the pseudo echo SE(i) is subtracted from the signal Sd(i), and the echo-removed residual signal U(i) is output.

The echo-removed residual signal U(i) is output from the echo canceller 15 to the echo suppressor 18. An operation performed in the echo suppressor 18 differs from that performed in the echo canceller 15, and an amplitude of a signal output from the echo canceller 15 is uniformly suppressed in the echo suppressor 18. In detail, in the echo suppressor 18, a short-time power of the received input signal Rd(i) is calculated, it is judged that a time period, in which a value of the short-time power is equal to or higher than a threshold value, denotes a voice uttering time period of the far-end caller, the amplitude of the residual signal U (i) received from the echo canceller 15 is suppressed during the voice uttering time period by a predetermined attenuation degree (for example, 10 dB) not so high, and a transmitting output signal Td(i) is obtained. Thereafter, the voice coding is performed in the voice codec 5 for the transmitting output signal Td(i) of which the amplitude is suppressed by the predetermined attenuation degree in the echo suppressor 18. Thereafter, the transmitting output signal Td(i) is modulated in the base band signal processing unit 4, is converted into an analog signal of a transmission frequency band in the transmitting circuit unit 14 and is transmitted as an external transmitting signal T.

As is described above, in the echo processing unit 6 of the conventional voice communication device 1, a residual echo component not sufficiently removed in the echo canceller 15 is suppressed in the echo suppressor 18. Also, because the attenuation degree is set to a value not so high, the voice of the near-end caller is prevented from being considerably attenuated during a double-talk time period in which the far-end caller and the near-end caller simultaneously give voices.

Also, in Fig. 2 of Published Unexamined Japanese Patent Application H10-242891 of 1998, another echo canceller is disclosed. In this echo canceller, a conventional double talk detection is performed, and the renewal of filter coefficients is stopped or started according to the detection. In Fig. 2 of the Published Unexamined Japanese Patent Application H10-242891 of 1998, a power of a transmitting signal transmitted from the side of a near-end caller is expressed by Sp, a power of a received signal sent from the side of a far-end caller is expressed by Rp, and a power of a residual signal denoting an output signal output from a subtracting circuit 21 is expressed by Ep. In this conventional echo canceller, following equations (1) to (3) are used, when one of following conditions is satisfied, it is judged that a current time is in a double-talk time period (or a time period in which the near-end caller and the far-end caller simultaneously gives voices) or a voiceless time period of the far-end caller, and the renewal of filter coefficients is stopped. Here, P1, P2 and P3 are equal to fixed values respectively.

$$Rp < P1 \qquad (1)$$

$$Sp < P2 \times Rp \qquad (2)$$

$$Ep < P3 \times Sp \qquad (3)$$

Condition-1: equation (1) is satisfied.
Condition-2: equation (1) is not satisfied, but equation (2) is satisfied.
Condition-3: neither equation (1) nor equation (2) is satisfied, but equation (3) is satisfied.

Also, another conventional invention is disclosed in Published Unexamined Japanese Patent Application H10-294785 of 1998. In this conventional invention, a speaker amplification value output from an external input is received in a control CPU, the speaker amplification value is output from the control CPU to a speaker amplifying unit, a full-wave rectification is performed for an output of the speaker amplifying unit in a full wave rectifier, and a full-wave rectified signal is input to the control CPU. Thereafter, a gain of a received signal input to an echo canceling circuit is controlled according to the full-wave rectified signal. That is to say, a speaker output is calculated from the full-wave rectified signal transmitted through the full wave rectifier, and a gain of a received signal input to an echo canceller circuit is enlarged according to the speaker output. Therefore, the received signal determined according to the speaker output can be input to the echo canceling circuit, and the echo cancellation can be effectively performed.

However, in the conventional echo processing unit 6 shown in Fig. 16, in cases where the speaker amplification value is set to a value higher than a certain value, non-linear distortion occurs in a signal output from an operation amplifier of the speaker amplifier 8. Also, in cases where the speaker amplification value is set to a high value, a loud voice is output from the speaker 10, and an amplitude of the analog signal Sa input to the A/D converter 13 through the microphone 11 and the microphone amplifier 12 is enlarged. In cases where the amplitude of the analog signal Sa is set to a value higher than a certain value so as to exceed an input maximum value of the A/D converter 13, non-linear distortion occurs in the output of the A/D converter 13.

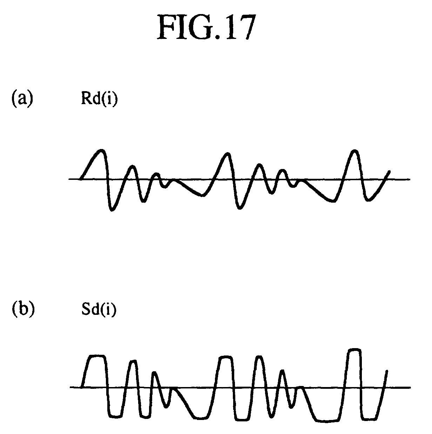

In this case, non-linear distortion occurs in the signal Sd(i) input to the echo canceller 15 due to both or one of the non-linear distortion occurring in the signal of the speaker amplifier 8 and the non-linear distortion occurring in the output of the A/D converter 13. An example of the signal Sd(i) having no non-linear distortion is shown in Fig. 17(a), and an example of the signal Sd(i) having non-linear distortion is shown in Fig. 17(b). As a result of the occurring of the non-linear distortion in the signal Sd(i), the precision in the estimation of the filter coefficients h(n) performed in the adaptive filter 16 is degraded. Therefore, the difference between the pseudo echo SE(i) calculated from the filter coefficients h(n) and an echo actually included in the signal Sd(i) is enlarged, and an echo removing performance of the echo processing unit 6 is degraded. Also, in addition to the degradation of the echo removing performance, there is probability that a signal equivalent to a degraded sound is added to the signal Sd(i). When the echo removing performance is degraded, a large residual echo remains in the residual signal U(i) output from the echo canceller 15. In this case, even though the echo suppressing process is performed for the residual signal U(i) in the echo suppressor 18 so as to suppress the amplitude of the residual signal U(i) by a prescribed attenuation value, a problem has arisen that a large echo component remains in the transmitting output signal Td (i). Also, in the conventional invention disclosed in the Published Unexamined Japanese Patent Application H10-242891 of 1998, when the speaker amplification value is changed, there is probability that the power Ep of the residual signal is heightened due to the degradation of the echo removing performance. In this case, the equation (3) is satisfied, and it is erroneously judged to be the double talk. Therefore, because the renewal of the filter coefficients is stopped, the echo removing performance is not improved, and a problem has arisen that an echo remains in a transmitting output signal.

Also, in the conventional invention disclosed in the Published Unexamined Japanese Patent Application H10-294785 of 1998, to determine the speaker amplification value of the speaker amplifier, it is required to arrange the full wave rectifier. Therefore, a problem has arisen that a size of the echo processing device is enlarged. Also, because a waveform of the signal output from the full wave rectifier is considerably changed, it is difficult to accurately determine the speaker amplification value.

DISCLOSURE OF THE INVENTION

The present invention is provided to solve the above-described problems, and a first object of the present invention is to provide a voice communication device having an echo processing unit in which a residual of an echo is suppressed regardless of a speaker amplification value.

Also, a second object of the present invention is to provide a voice communication device having a compact echo processing unit.

A voice communication device of the present invention comprises a control CPU for outputting a speaker amplification value corresponding to volume on a speaker which is adjusted by a terminal user by using a volume control unit, and an echo processing unit for reducing an echo equivalent to output voice, which is obtained by amplifying a received input signal demodulated and voice-decoded according to the speaker amplification value output from the control CPU and outputting the received input signal from the speaker and is mixed with a transmitting input signal input through a microphone, according to the speaker amplification value.

The echo processing unit comprises echo canceling means for calculating a pseudo echo fromboth the received input signal amplified according to a degree of the change of the speaker amplification value and a filter coefficient calculated according to an acoustic transmission characteristic between the microphone and the speaker, and removing the echo from the transmitting input signal including the echo by using the pseudo echo.

The echo processing unit comprises echo canceling means for changing a filter coefficient, which is calculated according to an acoustic transmission characteristic between the microphone and the speaker, according to a degree of the change of the speaker amplification value, calculating a pseudo echo from both the received input signal and the filter coefficient, and removing the echo from the transmitting input signal including the echo by using the pseudo echo.

The filter coefficient is changed stage by stage by the echo canceling means in a case where the degree of the change of the speaker amplification value is larger than a prescribed degree of the change.

The filter coefficient is set to zero or a value near to zero by the echo canceling means in a case where the degree of the change of the speaker amplification value is larger than a prescribed degree of the change.

The filter coefficient is changed by the echo canceling means in a case where the degree of the change of the speaker amplification value is larger than a prescribed degree of the change within a prescribed time period.

The echo processing unit comprises echo canceling means for calculating a pseudo echo from both the received input signal and the filter coefficient calculated according to an acoustic transmission characteristic between the microphone and the speaker, changing the pseudo echo according to the speaker amplification value, and removing the echo from the transmitting input signal including the echo by using the changed pseudo echo.

The pseudo echo is set to zero or a value near to zero by the echo canceling means in a case where the speaker amplification value is larger than a prescribed threshold value.

The pseudo echo is attenuated by a prescribed value by the echo canceling means in a case where the speaker amplification value is larger than a prescribed threshold value.

The pseudo echo, which is calculated according to the filter coefficient calculated before the speaker amplification value becomes larger than a prescribed threshold value, is used by the echo canceling means to remove the echo from the transmitting input signal in a case where the speaker amplification value is larger than the prescribed threshold value.

The echo processing unit comprises double talk detecting means for altering a judgment criterion for double talk detection according to a degree of the change of the speaker amplification value and detecting a double talk according to the altered judgment criterion, and echo canceling means for calculating a pseudo echo from a filter coefficient calculated according to an acoustic transmission characteristic between the microphone and the speaker, removing the echo from the transmitting input signal including the echo by using the pseudo echo, and performing a renewal stop or a renewal start of the filter coefficient according to a detection result of the double talk detecting means.

The echo processing unit comprises double talk detecting means for altering a judgment criterion for double talk detection according to a degree of the change of the speaker amplification value and detecting a double talk according to the altered judgment criterion, echo canceling means for reducing an echo component of the transmitting input signal by using a pseudo echo and producing a residual signal, and echo suppressing means for suppressing the residual signal produced by the echo canceling means at an attenuation value which changes according to a detection result of the double talk detecting means.

The double talk is detected by the double talk detecting means according to the comparison of a power of the transmitting input signal with a power of the residual signal, and the judgment criterion for double talk detection is altered by the double talk detecting means by changing a weighting factor, by which the power of the transmitting input signal is multiplied, according to the degree of the change of the speaker amplification value.

The echo processing unit comprises echo suppressing means for suppressing the transmitting input signal including the echo at an attenuation value corresponding to the speaker amplification value output from the control CPU.

The echo processing unit is formed of a digital signal processor.

An echo processing processor of the present invention comprises a received signal input port for receiving a received input signal including voice information, a speaker amplification value input port for receiving a speaker amplification value corresponding to volume which is adjusted by using a volume control unit, a transmitting signal input port for receiving a transmitting input signal including voice given by a terminal user, and an echo reduction processing unit for performing an echo reduction process in which an echo equivalent to output voice, which is obtained by amplifying the received input signal received in the received signal input port according to the speaker amplification value received in the speaker amplification value input port and outputting the received input signal from a speaker and is mixed with the transmitting input signal received in the transmitting signal input port, is reduced according to the speaker amplification value.

An amplification process for amplifying the received input signal received in the received signal input port according to a degree of the change of the speaker amplification value received in the speaker amplification value input port, a filter coefficient calculating process for calculating the filter coefficient according to an acoustic transmission characteristic between a microphone and the speaker, a pseudo echo calculating process for calculating a pseudo echo from the filter coefficient calculated in the filter coefficient calculating process and the received input signal amplified in the amplification process and an echo canceling process for removing the echo from the received input signal by using the pseudo echo are performed in the echo reduction processing unit.

A filter coefficient calculating process for calculating the filter coefficient according to an acoustic transmission characteristic between a microphone and the speaker, a pseudo echo calculating process for changing the filter coefficient calculated in the filter coefficient calculating process according to a degree of the change of the speaker amplification value received in the speaker amplification value input port and calculating a pseudo echo from both the filter coefficient and the received input signal received in the received signal input port and an echo canceling process for removing the echo from the received input signal by using the pseudo echo are performed in the echo reduction processing unit.

The filter coefficient is changed stage by stage in the pseudo echo calculating process performed in the echo reduction processing unit in a case where the degree of the change of the speaker amplification value is larger than a prescribed degree of the change.

The filter coefficient is set to zero or a value near to zero in the pseudo echo calculating process performed in the echo reduction processing unit in a case where the degree of the change of the speaker amplification value is larger than a prescribed degree of the change.

The filter coefficient is changed in the pseudo echo calculating process performed in the echo reduction processing unit in a case where the degree of the change of the speaker amplification value is larger than a prescribed degree of the change within a prescribed time period.

A filter coefficient calculating process for calculating the filter coefficient according to an acoustic transmission characteristic between a microphone and the speaker, a pseudo echo calculating process for calculating a pseudo echo from both the filter coefficient calculated in the filter coefficient calculating process and the received input signal received in the received signal input port and an echo canceling process for changing the pseudo echo calculated in the pseudo echo calculating process according to the speaker amplification value received in the speaker amplification value input port and removing the echo from the received input signal by using the changed pseudo echo are performed in the echo reduction processing unit.

The pseudo echo is calculated according to the filter coefficient, which is calculated before the speaker amplification value becomes larger than a prescribed threshold value, in the pseudo echo calculating process performed in the echo reduction processing unit in a case where the speaker amplification value is larger than the prescribed threshold value.

A double talk detecting process for altering a judgment criterion for double talk detection according to a degree of the change of the speaker amplification value and detecting a double talk according to the altered judgment criterion, a filter coefficient calculating process for calculating the filter coefficient according to an acoustic transmission characteristic between a microphone and the speaker and performing a renewal stop or a renewal start of the filter coefficient according to a double talk judgment result of the double talk detecting process, a pseudo echo calculating process for calculating a pseudo echo from both the filter coefficient calculated in the filter coefficient calculating process and the received input signal received in the received signal input port and an echo canceling process for removing the echo from the received input signal by using the pseudo echo are performed in the echo reduction processing unit.

A double talk detecting process for altering a judgment criterion for double talk detection according to a degree of the change of the speaker amplification value and detecting a double talk according to the altered judgment criterion, an echo canceling process for reducing an echo component of the transmitting input signal by using a pseudo echo and producing a residual signal and an echo suppressing process for suppressing the residual signal at an attenuation value which changes according to a detection result of the double talk detecting process are performed in the echo reduction processing unit.

An echo suppressing process for suppressing the transmitting input signal including the echo at an attenuation value corresponding to the speaker amplification value is performed in the echo reduction processing unit.

BRIEF DESCRIPTION OF THE DRAWINGS

Fig. 1 is a block diagram showing the configuration of a voice communication device according to the present invention.
Fig. 2 is a block diagram showing the configuration of an echo processing unit arranged in the voice communication device according to a first embodiment of the present invention.
Fig. 3 is a flow chart describing an operation of an echo canceller according to the first embodiment of the present invention.
Fig. 4 is a flow chart describing an operation of an echo suppressor according to the first embodiment of the present invention.
Fig. 5 is a flow chart describing another example of the operation of the echo canceller according to the first embodiment of the present invention.
Fig. 6 is a flow chart describing an operation of an echo canceller according to a second embodiment of the present invention.

Fig. 7 is a flow chart describing another example of the operation of the echo canceller according to the second embodiment of the present invention.
Fig. 8 is a flow chart describing an operation of an echo canceller according to a third embodiment of the present invention.
Fig. 9 is a flow chart describing another example of the operation of the echo canceller according to the third embodiment of the present invention.
Fig. 10 is a flow chart describing an operation of an echo canceller according to a fourth embodiment of the present invention.
Fig. 11 is a flow chart describing an operation of an echo canceller according to a fifth embodiment of the present invention.
Fig. 12 is a block diagram showing the configuration of an echo processing unit arranged in the voice communication device according to a seventh embodiment of the present invention.
Fig. 13 is a flow chart describing an operation of an echo canceller according to the seventh embodiment of the present invention.
Fig. 14 is a block diagram showing the configuration of an echo processing unit arranged in the voice communication device according to an eighth embodiment of the present invention.
Fig. 15 is a block diagram showing the configuration of a conventional voice communication device.
Fig. 16 is a block diagram showing the configuration of an echo processing unit arranged in the conventional voice communication device.
Fig. 17 is an explanatory view showing both a signal having no non-linear distortion and a signal having non-linear distortion.

BEST MODE FOR CARRYING OUT THE INVENTION

Hereinafter, the best mode for carrying out the present invention will now be described with reference to the accompanying drawings to explain the present invention in more detail.

EMBODIMENT 1

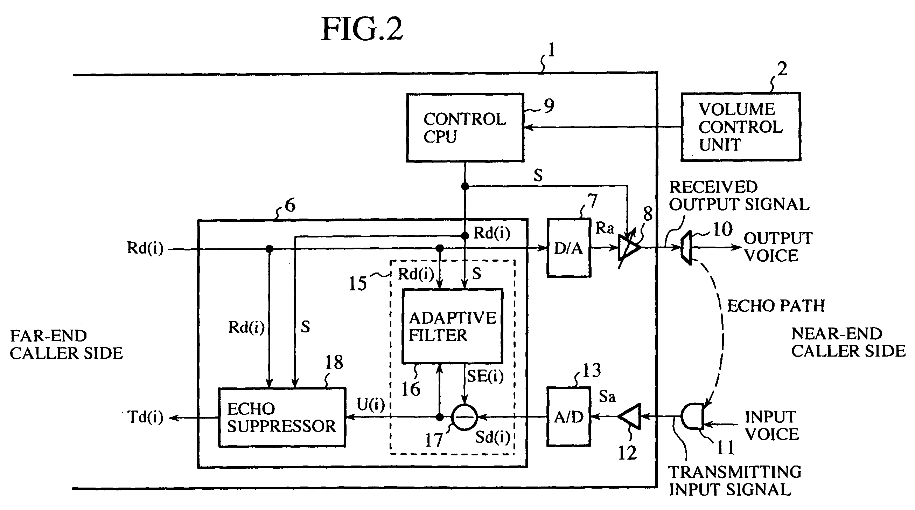

Fig. 1 is a block diagram showing the configuration of a voice communication device according to the present invention, and Fig. 2 is a block diagram showing an echo processing unit arranged in the voice communication device shown in Fig. 1 and the configuration of peripheral units. In the conventional voice communication device, the control CPU 9 is arranged to output the speaker amplification value corresponding to the speaker volume adjusted in the volume control unit 2 to the speaker amplifier 8. In contrast, in a voice communication device shown in Fig. 1, a control CPU 9 is arranged to output a speaker amplification value S to both an echo processing unit 6 and a speaker amplifier 8. The voice communication device according to a first embodiment of the present invention comprises an echo processing unit in which an echo included in a transmitting speech signal is reduced by controlling the echo canceller 15 and the echo suppressor 18 by using the speaker amplification value S output from the control CPU 9. Here, the constituent elements of Fig. 1 and Fig. 2, which are the same as or equivalent to those shown in Fig. 15 and Fig. 16, are indicated by the same reference numerals as those of the constituent elements shown in Fig. 15 and Fig. 16, and additional description of the same operations as those of the constituent elements shown in Fig. 15 and Fig. 16 is omitted.

A terminal user adjusts the volume on the speaker 10 (hereinafter, called speaker volume) by using the volume control unit 2, a speaker amplification value S corresponding to the adjusted speaker volume is output to both the echo processing unit 6 and the speaker amplifier 8 under control of the control CPU 9. The speaker amplification value S is set in the volume control unit 2 when the user operates a keyboard or a knob of the volume control unit 2. However, it is applicable that a mark corresponding to the speaker amplification value S be input by using a keyboard and be received in the volume control unit 2 to make the control CPU 9 output the speaker amplification value S corresponding to the mark through the volume control unit 2.

In the speaker amplifier 8, as shown in Table 1, levels of seven amplification values can be, for example, preset around a reference level at 6 dB intervals.

### Table 1

| + 24 dB |
| --- |
| + 18 dB |
| + 12 dB |
| + 6 dB |
| 0 dB (reference) |
| - 6 dB |
| - 12 dB |

Thereafter, both a level of the speaker amplification value S, at which non-linear distortion occurs in the output of the speaker amplifier 8, and a level of the speaker amplification value S, at which there is probability that a degraded sound is generated in the echo canceller 15, are measured and determined in advance from the seven levels of the speaker amplifier 8. In following description, non-linear distortion occurs in the output of speaker amplifier 8 when the speaker amplification value S is equal to or higher than 18 dB (or level A), and there is probability that a degraded sound is generated in the echo canceller 15 when the speaker amplification value S is equal to or higher than 24 dB (or level B).

The speaker amplification value S output from the control CPU 9 to the echo processing unit 6 is input to both the adaptive filter 16 of the echo canceller 15 and the echo suppressor 18. In the echo canceller 15, the speaker amplification value S is used as a parameter applied to judge whether or not the echo removal should be performed for the signal Sd(i). In detail, the speaker amplification value S input from the control CPU 9 is compared with a prescribed threshold value, and it is judged whether or not the speaker amplification value S is lower than 24 dB (or level B). In cases where the speaker amplification value S is lower than 24 dB, the echo removal is performed for the signal Sd(i) in the echo canceller 15. In contrast, in cases where the speaker amplification value S is equal to or higher than 24 dB, an echo removal value of the echo canceller 15 is set to 0 (that is to say, pseudo echo SE(i)=0), and no echo removal is performed.

Here, in this example, the pseudo echo SE(i) is set to 0. However, it is applicable that the pseudo echo SE(i) be set to a value near to zero on condition that a degree of the suppression of the pseudo echo is set so as to suppress the occurrence of noise.

Also, the amplitude of the received input signal Rd(i) input to the adaptive filter 16 of the echo canceller 15 is amplified in the adaptive filter 16 according to a degree of the change of the speaker amplification value S. For example, in cases where the speaker amplification value S is changed from -6 dB to +6 dB, the amplitude of the received input signal Rd(i) is amplified by +12 dB equivalent to a degree of the change of the speaker amplification value S. Also, for example, in cases where the speaker amplification value S is changed from +6 dB to 0 dB of the reference level, the amplitude of the received input signal Rd(i) is amplified by -6 dB equivalent to a degree of the change of the speaker amplification value S. As is described above, in the adaptive filter 16, filter coefficients h(n) are calculated according to both the received input signal Rd(i)amplified and the residual signal U(i), and the pseudo echo SE(i) is calculated by using the filter coefficients h(n) and the received input signal Rd(i). Here, it is not necessarily required to amplify the received input signal Rd(i) input to the echo canceller 15 in the adaptive filter 16 according to the speaker amplification value S, but it is applicable that a received input signal Rd(i) amplified according to the speaker amplification value S in the outside of the echo canceller 15 be input to the echo canceller 15.

Also, in the echo suppressor 18, a degree of attenuation corresponding to the suppression of the residual signal U(i) output from the echo canceller 15 is changed according to the speaker amplification value S. In detail, in cases where the speaker amplification value S output from the control CPU 9 is equal to or higher than 18 dB (or level A), the residual signal U(i) output from the echo canceller 15 is considerably attenuated (for example, -40 dB). Also, in cases where the speaker amplification value S is lower than 18 dB, the residual signal U(i) is slightly attenuated (for example, -10 dB), and the transmitting output signal Td(i) is output.

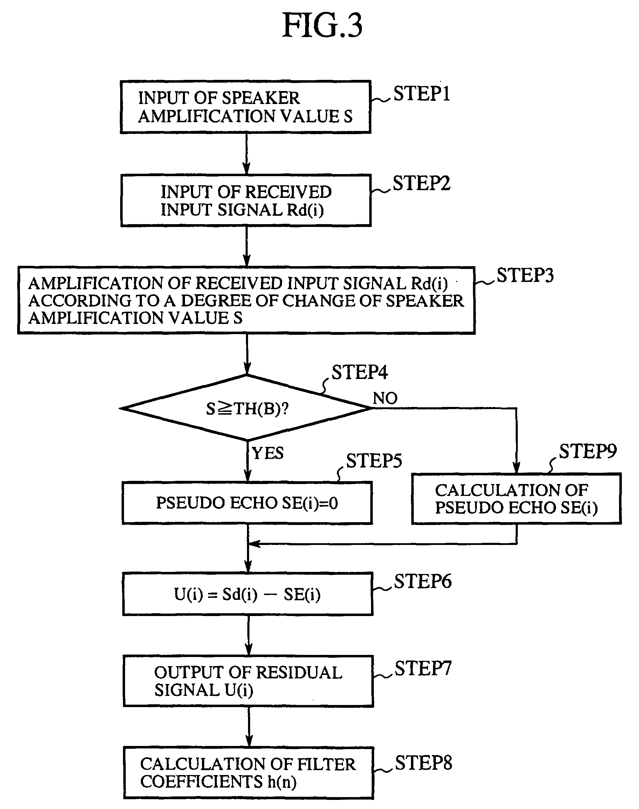

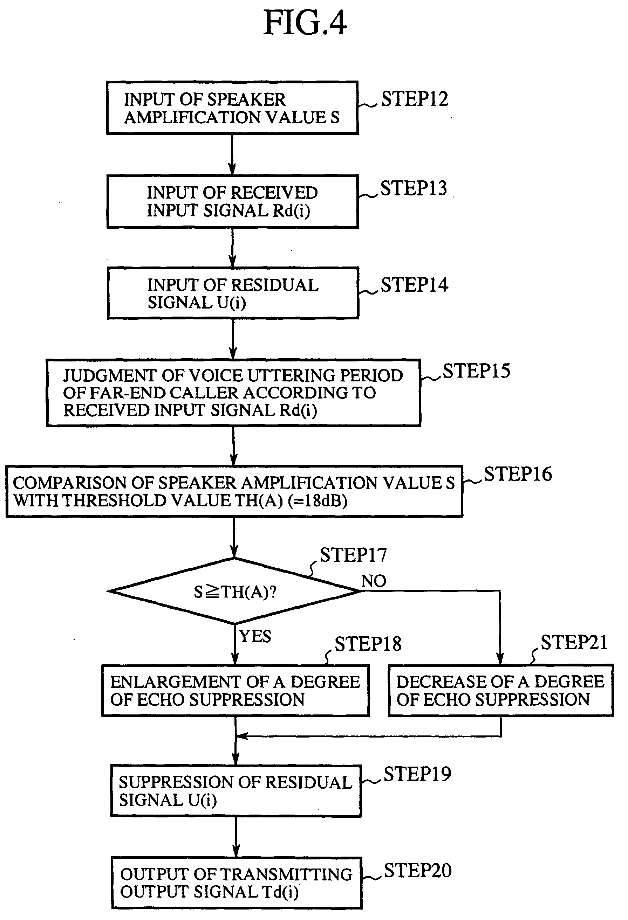

Fig. 3 is a flow chart describing an operation of the echo canceller 15 arranged in the echo processing unit 6, and Fig. 4 is a flow chart describing an operation of the echo suppressor 18. Hereinafter, an operation of the echo processing unit 6 will be described with reference to Fig. 3 and Fig. 4. In Fig. 3, the speaker amplification value S is input from the control CPU 9 to the echo canceller 15 (step 1), and the received input signal Rd(i) is input to the echo canceller 15 (step 2). Thereafter, the received input signal Rd(i) is amplified according to a degree of the change of the speaker amplification value S (step 3), and the speaker amplification value S is compared with a threshold value TH(B) (equal to 24 dB) (step 4).

In cases where the speaker amplification value S is equal to or higher than 24 dB in the step 4, a considerably large non-linear distortion is formed in the input signal Sd(i), and there is probability that a degraded sound is added to the input signal Sd(i) in the echo removal for the input signal Sd(i). Therefore, in the step 4, the speaker amplification value S is compared with the threshold value TH (B) (equal to 24 dB) to judge whether or not the echo removal is performed for the signal Sd(i). In the step 4, in cases where the speaker amplification value S is equal to or higher than 24 dB, the pseudo echo signal SE(i) is determined to 0 (step 5), the pseudo echo signal SE(i) set to 0 is subtracted from the signal Sd(i) including an echo (step 6), and the residual signal U(i) is output to the echo suppressor 18 (step 7). Here, the subtraction of SE(i) set to 0 from the signal Sd(i) including an echo denotes the performance of no echo removal.

In contrast, in cases where the speaker amplification value S is lower than 24 dB in the step 4, the pseudo echo signal SE(i) is calculated in a step 9 from the filter coefficients h(n) and the received input signal Rd(i) already obtained, the pseudo echo signal SE(i) is subtracted from the signal Sd(i) including an echo (step 6), and the residual signal U(i) is output to the echo suppressor 18 (step 7).

Thereafter, in a step 8, the filter coefficients h(n) are calculated from both the received input signal Rd(i) and the residual signal U(i), and the procedure returns to the step 1.

Thereafter, as shown in Fig. 4, the speaker amplification value S is input from the control CPU 9 to the echo suppressor 18 (step 12), and the received input signal Rd(i) is input to the echo suppressor 18 (step 13). Also, the residual signal U(i) is input from the echo canceller 15 to the echo suppressor 18 (step 14). In the echo suppressor 18, a short-time power of the received input signal Rd(i) is, for example, calculated, and it is judged that a time period, in which the value of the short-time power is equal to or higher than a certain threshold value, is a voice uttering period of the far-end caller (step 15). Thereafter, the speaker amplification value S in the voice uttering period of the far-end caller judged in the step 15 is compared with a threshold value TH(A) (= 18 dB) (step 16).

In cases where the speaker amplification value S is equal to or higher than 18 dB, the precision of the estimation of the filter coefficients h(n) is degraded due to a large non-linear distortion occurring in the input signal Sd(i). Also, a residual echo is included in the residual signal U(i) output from the echo canceller 15. Therefore, in the step 16, the speaker amplification value S is compared with the threshold value TH(A) (= 18 dB), and it is judged whether or not a degree of the attenuation of the residual signal U(i) is enlarged. As a result of the comparison of the speaker amplification value S with the threshold value TH(A) (= 18 dB) (step 17), in cases where the speaker amplification value S is equal to or higher than 18 dB, a degree of the suppression of an echo is enlarged (step 18), and the residual signal U(i) is suppressed (step 19). Thereafter, a transmitting output signal Td(i), of which an echo is suppressed to a large degree of the attenuation (for example, -40 dB), is output (step 20). In contrast, in cases where the speaker amplification value S is lower than 18 dB, a degree of the suppression of an echo is lessened (for example, -10 dB) in a step 21, and the residual signal U(i) is suppressed (step 19).

As is described above, in cases where the speaker amplification value S is equal to or higher than a prescribed level such as 24 dB described above, a large non-linear distortion occurs in the signal Sd(i) input to the echo processing unit 6, and there is probability that a degraded sound is added to the signal Sd(i) due to the echo removal for the signal Sd(i). Therefore, the echo canceller 15 is arranged in the echo processing unit 6 to judge according to the speaker amplification value S output from the control CPU 9 whether or not the echo removal should be performed. Accordingly, a time period, in which a signal equivalent to a degraded sound is added to the signal Sd(i) at high probability due to the echo removal, can be reliably detected. Also, because a degree of the echo removal is controlled to 0 (that is to say, the pseudo echo SE(i)=0) in the time period corresponding to the degraded sound addition at high probability, the echo removal is stopped, and the addition of a degraded sound to the transmitting signal can be prevented.

Also, because the echo canceller 15 is arranged in the echo processing unit 6 to change a degree of the amplification of the received input signal Rd(i) according to a degree of the change of the speaker amplification value S, it is possible to make the received input signal Rd(i) input to the adaptive filter 16 agree with the level of the received output signal output from the speaker amplifying unit 8 with accurate. Therefore, even though the speaker amplification value S is changed, the filter coefficients h(n) are properly calculated in the adaptive filter 16, and the pseudo echo SE(i) similar to an actual echo can be calculated in the adaptive filter 16. Accordingly, the echo can be properly removed in the subtracting unit 17.

Also, in cases where the speaker amplification value S is equal to or higher than another prescribed level such as 18 dB described above, there is probability that a residual echo remains in the residual signal U(i) output from the echo canceller 15 due to the degradation of the echo removing performance of the echo canceller 15. Therefore, an echo component not removed in the echo canceller 15 can be suppressed by enlarging a degree of the attenuation for suppressing the output of the echo canceller 15 in the echo compressor 18.

In the configuration of the voice communication device 1 shown in Fig. 1 and Fig. 2, the volume control unit 2, the speaker 10 or the microphone 11 is not included in the voice communication device 1. That is to say, in an assumed use condition of the voice communication device 1, the speaker volume is adjusted by using a volume control unit of an on-vehicle audio device or a domestic audio device, and voice is input to a microphone and is output from a speaker. However, it is applicable that the volume control unit 2, the speaker 10 and the microphone 11 be included in the voice communication device 1. Also, it is applicable that an image displaying unit such as a liquid-crystal display or a cathode ray tube (CRT) and an image inputting unit such as a charge coupled device (CCD) camera be included in the voice communication device 1 in addition to the volume control unit 2, the speaker 10 and the microphone 11. In this case, the voice communication device 1 can be used as a portable visual telephone in which visual information is transmitted and received as well as audio information.

In the above description, the voice communication device 1 comprises the echo processing unit 6 having the echo canceller 15 and the echo suppressor 18, and an echo is reduced according to the speaker amplification value S in the echo processing unit 6. However, it is applicable that the echo processing unit 6 have either the echo canceller 15 or the echo suppressor 18. For example, in case of the echo processing unit 6 having the echo canceller 15, a time period, in which a signal equivalent to a degraded sound is added to the signal Sd(i) due to the echo removal, can be detected by using the speaker amplification value S as a parameter for judging whether or not the echo removal should be performed. Also, because a degree of the amplification of the received input signal Rd(i) is changed according to a degree of the change of the speaker amplification value S, it is possible to make the received input signal Rd(i) input to the adaptive filter 16 agree with the level of the received output signal output from the speaker amplifying unit 8 with accurate. Therefore, the pseudo echo SE(i) similar to an actual echo can be calculated. Also, in case of the echo processing unit 6 having the echo suppressor 18, because a degree of the attenuation for suppressing a signal including an echo is changed, the echo can be efficiently suppressed according to the strength of the echo included in the signal.

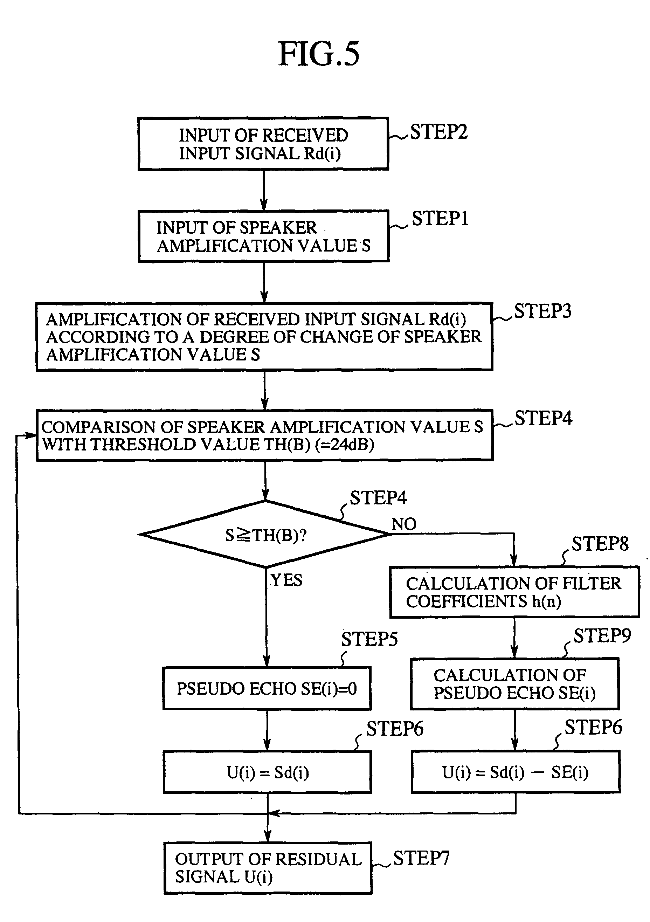

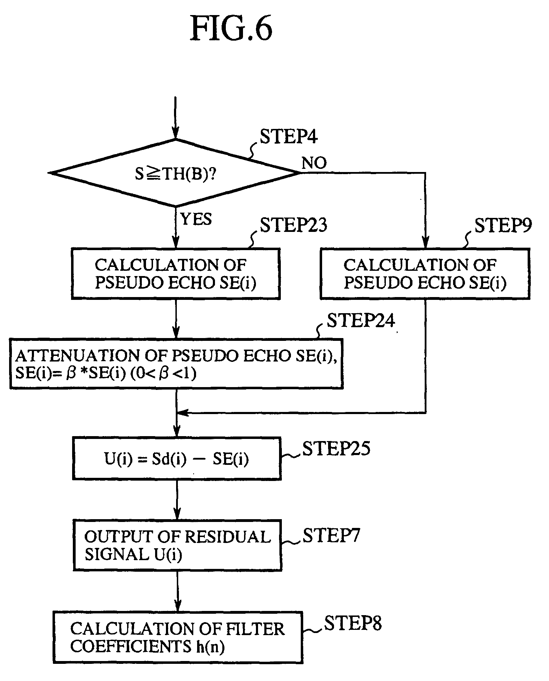

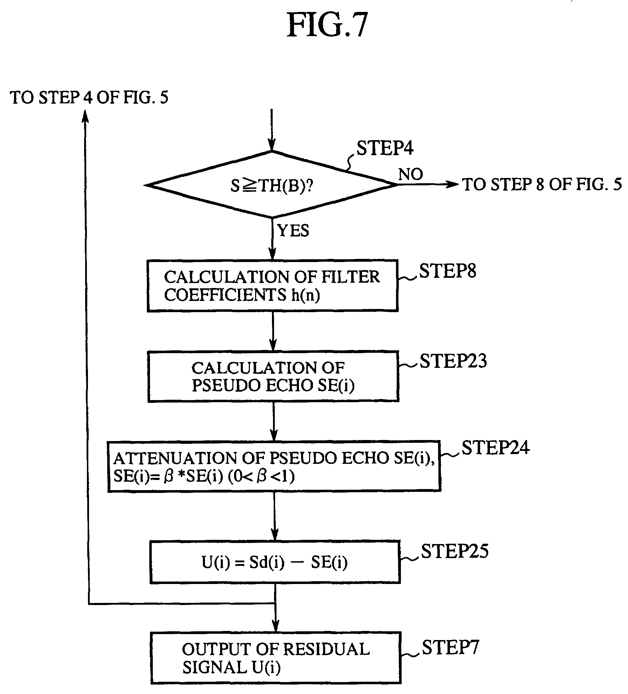

Here, as shown in Fig. 5, it is applicable that the operation described with reference to Fig. 3 be performed by changing an order of the steps of the procedure. In Fig. 5, the steps, which are equivalent to or the same as those shown in Fig. 3, are indicated by the same step numerals as those shown in Fig. 3.

EMBODIMENT 2

In the voice communication device according to the first embodiment, in cases where the speaker amplification value S is equal to or higher than a prescribed level (24 dB), a considerably large non-linear distortion occurs in the signal Sd(i) input to the echo processing unit 6, and there is probability that a degraded sound is added to the signal Sd (i) due to the echo removal for the signal Sd(i). Therefore, the echo canceller 15 is arranged to perform no echo removal in cases where the speaker amplification value S is equal to or higher than the prescribed level. However, even though a degree of the removal of an echo is controlled for the removal of the echo by attenuating the pseudo echo SE(i) by a constant value, the addition of a degraded sound to the signal Sd(i) can be prevented.

In a voice communication device according to a second embodiment of the present invention, in cases where the speaker amplification value S is equal to or higher than a prescribed level, the echo removal is performed in an echo canceller by using the pseudo echo SE(i) attenuated by a constant value.

Fig. 6 is a flow chart describing an operation of an echo canceller of a voice communication device according to a second embodiment of the present invention. The steps agreeing with or before the step 4 of the flow chart shown in Fig. 6 are the same as the steps 1 to 4 of the flow chart shown in Fig. 3, and additional description of the steps is omitted.

In the step 4 shown in Fig. 6, in cases where the speaker amplification value S is equal to or higher than a prescribed threshold value TH(B) (24 dB), a pseudo echo SE(i) is calculated in a step 23 by using the filter coefficients h(n) previously determined. Thereafter, the pseudo echo SE(i) calculated in the step 23 is multiplied by a factor $\beta$ ($0<\beta<1$) to attenuate the pseudo echo SE(i) by a constant value (step 24), the attenuated pseudo echo SE(i) is subtracted from the signal Sd(i) (step 25) to perform the echo removal. Here, the factor $\beta$ is, for example, set to 0.5.

After the completion of the above-described steps of the procedure, the step 7 and the step 8 are performed, and the procedure is transferred to the step 1. In contrast, in the step 4, in cases where the speaker amplification value S is lower than the prescribed threshold value TH(B) (24 dB), the procedure proceeds to the step 9, a pseudo echo SE(i) is calculated, and the procedure is returned to the step 25.

As is described above, in cases where the speaker amplification value S is equal to or higher than a prescribed level such as 24 dB described above, a considerably large non-linear distortion occurs in the signal Sd(i) input to the echo processing unit 6, and there is probability that a degraded sound is added to the signal Sd(i) due to the echo removal for the signal Sd(i). Therefore, it is judged according to the speaker amplification value S output from the control CPU 9 whether or not there is high probability that a signal equivalent to a degraded sound is added to the signal Sd(i) due to the echo removal for the signal Sd(i). In cases where there is high probability that a degraded sound is added to the signal Sd(i), a degree of the echo removal is controlled by using the pseudo echo SE(i) attenuated by a constant value, and the echo is removed. Therefore, the addition of a degraded sound to the transmitting signal can be prevented.

Here, as shown in Fig. 7, it is applicable that the operation described with reference to Fig. 6 be performed by changing an order of the steps of the procedure. In Fig. 7, the steps, which are equivalent to or the same as those shown in Fig. 5 or Fig. 6, are indicated by the same step numerals as those shown in Fig. 5 or Fig. 6.

EMBODIMENT 3

In the voice communication device according to the first embodiment, in cases where the speaker amplification value S is equal to or higher than a prescribed level (24 dB), a considerably large non-linear distortion occurs in the signal Sd(i) input to the echo processing unit 6, and there is probability that a degraded sound is added to the signal Sd(i) due to the echo removal for the signal Sd(i) . Therefore, the echo canceller 15 is arranged to perform no echo removal in cases where the speaker amplification value S is equal to or higher than the prescribed level. However, in cases where the speaker amplification value S is set to be equal to or higher than the prescribed level (24 dB), it is preferred that the renewal of the filter coefficients h(n) based on a sequential calculation is stopped, a pseudo echo SE(i) is calculated according to the filter coefficients h(n) which are determined before the setting of the speaker amplification value S to the prescribed level (24 dB), a degree of the echo removal is controlled by using the pseudo echo SE(i), and an echo included in the signal Sd(i) is removed. Also, when the speaker amplification value S is set to be lower than the prescribed level (24 dB), it is preferred that the renewal of the filter coefficients h(n) based on the sequential calculation is restarted, and a pseudo echo SE(i) is calculated according to the filter coefficients h(n) which are determined according to the sequential calculation.

In a voice communication device according to a third embodiment of the present invention, in cases where the speaker amplification value S is equal to or higher than a prescribed level, a pseudo echo SE(i) is calculated according to the filter coefficients h(n) which are determined before the setting of the speaker amplification value S to a value equal to or higher than the prescribed level (24 dB), and the echo removal is performed in an echo canceller by using the pseudo echo SE(i).

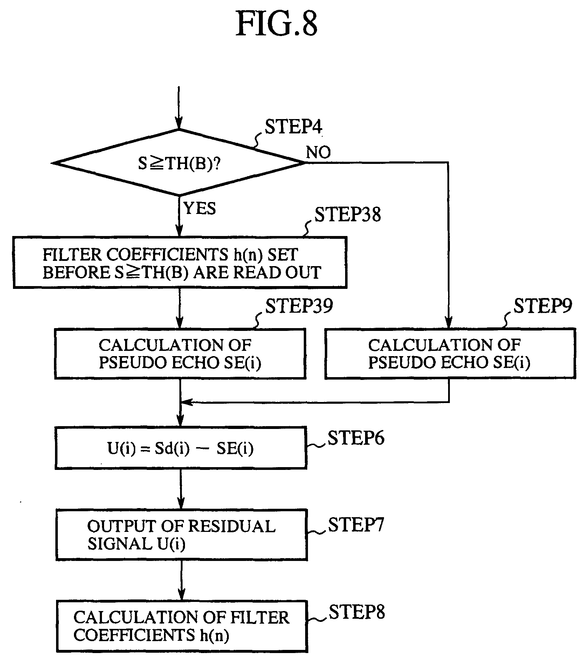

Fig. 8 is a flow chart describing an operation of an echo canceller of a voice communication device according to the third embodiment of the present invention. In Fig. 8, the step numerals, which are the same as those of Fig. 3, indicate the same steps as or the equivalent to those of Fig. 3.

In the step 4 of Fig. 8, in cases where the speaker amplification value S is equal to or higher than a prescribed threshold value TH(B) (24 dB), the procedure proceeds to a step 38, and the filter coefficients h(n) determined before the setting of the speaker amplification value S to a value equal to or higher than the prescribed level (24 dB) are read out from a memory (not shown). Thereafter, a pseudo echo SE(i) is calculated according to the filter coefficients h(n) which are read out in the step 38 (step 39), the pseudo echo SE(i) calculated in the step 39 is subtracted from the signal Sd(i) to remove an echo included in the signal Sd(i) (step 6).

After the completion of the above-described steps of the procedure, the step 7 and the step 8 are performed, and the procedure is transferred to the step 1. In contrast, in the step 4, in cases where the speaker amplification value S is lower than the prescribed threshold value TH(B) (24 dB), the procedure proceeds to the step 9. Thereafter, as is described in the first embodiment, the steps 6 to 8 are performed. Here, the filter coefficients h(n) calculated in the step 9 are stored in a memory.

As is described above, in this embodiment, in cases where the speaker amplification value S is equal to or higher than a prescribed level such as 24 dB described above, a considerably large non-linear distortion occurs in the transmitting speech digital signal Sd(i) input to the echo processing unit 6, and there is probability that a degraded sound is added to the signal Sd(i) due to the echo removal for the signal Sd(i). Therefore, it is judged according to the speaker amplification value S output from the control CPU 9 whether or not there is high probability that a signal equivalent to a degraded sound is added to the signal Sd(i) due to the echo removal for the signal Sd(i). In cases where there is high probability that a degraded sound is added to the signal Sd(i), a pseudo echo SE(i) is calculated by using the filter coefficients h(n) which are determined before the setting of the speaker amplification value S to a value equal to or higher than a prescribed level (24 dB), and the echo is removed from the signal Sd(i). Therefore, the addition of a degraded sound to the transmitting output signal Td(i) can be prevented.

In the above description, in cases where the speaker amplification value S is set to a value equal to or higher than a prescribed level, in the echo processing unit 6, a pseudo echo SE(i) is calculated according to the filter coefficients h(n) which are determined before the setting of the speaker amplification value S to the prescribed level (24 dB), and the echo is removed from the signal Sd(i). However, a pseudo echo SE(i) is not calculated according to the filter coefficients h(n) which are determined before the setting of the speaker amplification value S to the prescribed level, but it is applicable that a pseudo echo SE(i) be calculated according to the filter coefficients h(n) registered in advance.

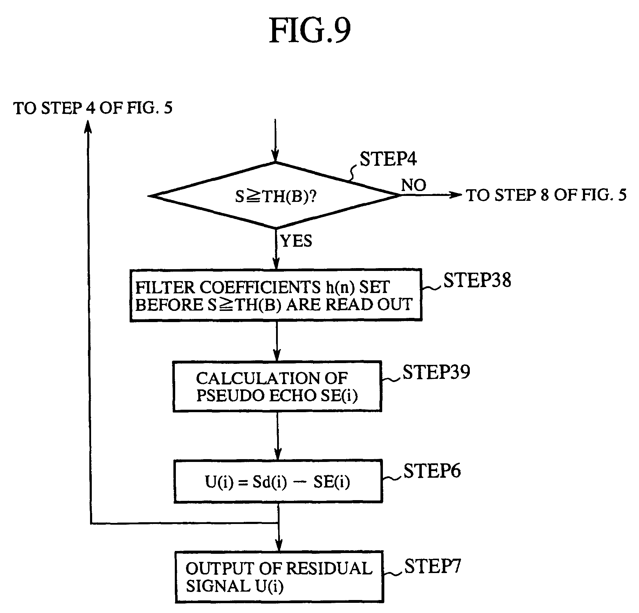

Here, as shown in Fig. 9, it is applicable that the operation described with reference to Fig. 8 be performed by changing an order of the steps of the procedure. In Fig. 9, the steps, which are equivalent to or the same as those shown in Fig. 5 or Fig. 8, are indicated by the same step numerals as those shown in Fig. 5 or Fig. 8.

EMBODIMENT 4

In the voice communication device according to the first embodiment, as is described in the step 3 of Fig. 3, the received input signal Rd(i) is amplified in the echo canceller 15 according to a degree of the change of the speaker amplification value S. However, the received input signal Rd(i) is not amplified in the echo canceller 15 according to a degree of the change of the speaker amplification value S, but it is preferred that the filter coefficients h(n) are changed by only multiplying once the filter coefficients h(n) by an adjustment value $\alpha$ corresponding to a degree of the change of the speaker amplification value S.

$$h(n) = \alpha \times h(n) \ (n = 0 \text{ to } N-1) \qquad (4)$$

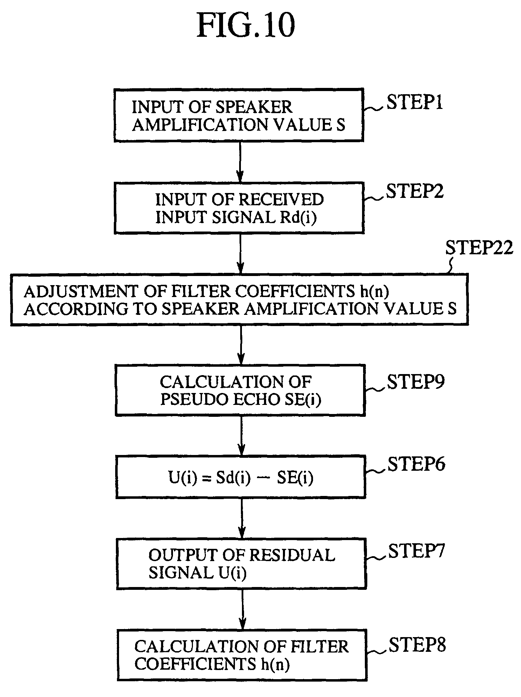

Fig. 10 is a flow chart describing an operation of an echo canceller according to a fourth embodiment. In Fig. 10, the step numerals, which are the same as those of Fig. 3, indicate the same steps as (or the steps equivalent to) those of Fig. 3. As is described in the first embodiment, when the speaker amplification value S and the received input signal Rd(i) are input to the echo canceller 15 in the steps 1 and 2, the filter coefficients h(n) corresponding to the speaker amplification value S are calculated according to the equation (4) in a step 22. Here, in cases where the speaker amplification value S is, for example, changed from +6 dB to +12 dB within 0.8 second, it is judged in the echo canceller 15 that the change of the speaker amplification value S is equivalent to the amplification of 6 dB, an adjustment value $\alpha$ equal to 2 is set in the echo canceller 15, and the filter coefficients h(n) are calculated by using the adjustment value $\alpha$. Also, in cases where the speaker amplification value S is, for example, changed from 0 dB to -6 dB, it is judged in the echo canceller 15 that the change of the speaker amplification value S is equivalent to the amplification of -6 dB, an adjustment value $\alpha$ equal to 1/2 is set in the echo canceller 15, and the filter coefficients h(n) are calculated by using the adjustment value $\alpha$. After the multiplication of the filter coefficients h(n) by the adjustment value $\alpha$ is once performed, a sequential calculation of the filter coefficients h(n) is performed by using the multiplied filter coefficients h(n) as initial values.

Here, the received input signal Rd(i) is not amplified according to a degree of the change of the speaker amplification value S, but the filter coefficients h (n) are changed by using the adjustment value $\alpha$ corresponding to the change of the speaker amplification value S, and the echo removal process is performed. In this case, as shown in Fig. 10, because the echo removal process is the same as that of the steps 6 to 9 of Fig. 3, additional description of the echo removal process in the steps 6 to 9 is omitted.

As is described above, the filter coefficients h (n) are changed by multiplying the filter coefficients h(n) by the adjustment value $\alpha$ corresponding to a degree of the change of the speaker amplification value S. Also, even though the speaker amplification value S is changed, proper filter coefficients h(n) are obtained by performing the multiplication of each filter coefficient h (n) by the number of filter coefficients. Therefore, a calculation volume is comparatively low, and the pseudo echo SE(i) is produced. Accordingly, the echo included in the signal Sd(i) can be removed.

Also, the filter coefficients h(n) are changed in cases where a degree of the change of the speaker amplification value S is larger than a predetermined degree of the change within a prescribed time period. Therefore, in cases where the speaker amplification value S is moderately changed in a time period longer than the prescribed time period so as to properly renew the filter coefficients h(n), there is no case where the filter coefficients h(n) are erroneously changed, and the echo included in the signal Sd(i) can be properly removed.

EMBODIMENT 5

In the voice communication device according to the fourth embodiment, the received input signal Rd (i) is not amplified in the echo canceller 15 according to a degree of the change of the speaker amplification value S, but the filter coefficients h(n) are changed by only multiplying once the filter coefficients h(n) by the adjustment value $\alpha$ corresponding to a degree of the change of the speaker amplification value S according to the equation (4). However, in cases where the adjustment value $\alpha$ is largely heightened (or largely lowered) because a degree of the change of the speaker amplification value S is large, there is probability that a considerably discontinuous change occurs in the pseudo echo SE(i) calculated from the filter coefficients h (n) . In cases where the removal of the echo included in the signal Sd(i) is performed by using the pseudo echo SE(i) changed considerably and discontinuously, there is probability that a degraded sound is added to the residual signal U(i) not including the echo.

Therefore, in an echo canceller 15 of a voice communication device according to a fifth embodiment, in cases where a degree of the change of the speaker amplification value S is larger than a predetermined value, a divided multiplication of the filter coefficients h(n) by a partial component of the adjustment value $\alpha$ is serially performed several times to substantially perform the multiplication of the filter coefficients h(n) by the adjustment value $\alpha$. In detail, in cases where the speaker amplification value S is, for example, changed by +12 dB or more within 0.8 second, a divided multiplication of the filter coefficients h(n) is performed several times by using partial components of the adjustment value $\alpha$. To perform the multiplication of the filter coefficients h(n) by a desired adjustment value $\alpha=4$ ($=2^2$), when each of the filter coefficients h(n) is sequentially calculated, a divided multiplication of the filter coefficient h(n) by 2 is serially performed twice. Also, in cases where the speaker amplification value S is, for example, changed by +18 dB within 0.8 second, to perform the multiplication of the filter coefficients h (n) by a desired adjustment value $\alpha=8$ ($=2^3$), a divided multiplication of each filter coefficient h (n) by 2 is serially performed three times. Also, in cases where the speaker amplification value S is, for example, changed by -12 dB or less within 0.8 second, a divided multiplication of the filter coefficients h(n) is serially performed several times by using partial components of the adjustment value $\alpha$. To perform the multiplication of the filter coefficients h(n) by a desired adjustment value $\alpha=1/4$ ($= (1/2)^2$), when each of the filter coefficients is sequentially calculated, a divided multiplication of the filter coefficient h(n) by 1/2 is serially performed twice. In general, in cases where a degree of the change of the speaker amplification value S is positive, to perform the multiplication of the filter coefficients h(n) by a desired adjustment value $\alpha=2^J$, a divided multiplication of each filter coefficient h(n) by 2 is serially performed J times. In contrast, in cases where a degree of the change of the speaker amplification value S is negative, to perform the multiplication of the filter coefficients h(n) by a desired adjustment value $\alpha=(1/2)^J$, a divided multiplication of each filter coefficient h(n) by 1/2 is serially performed J times.

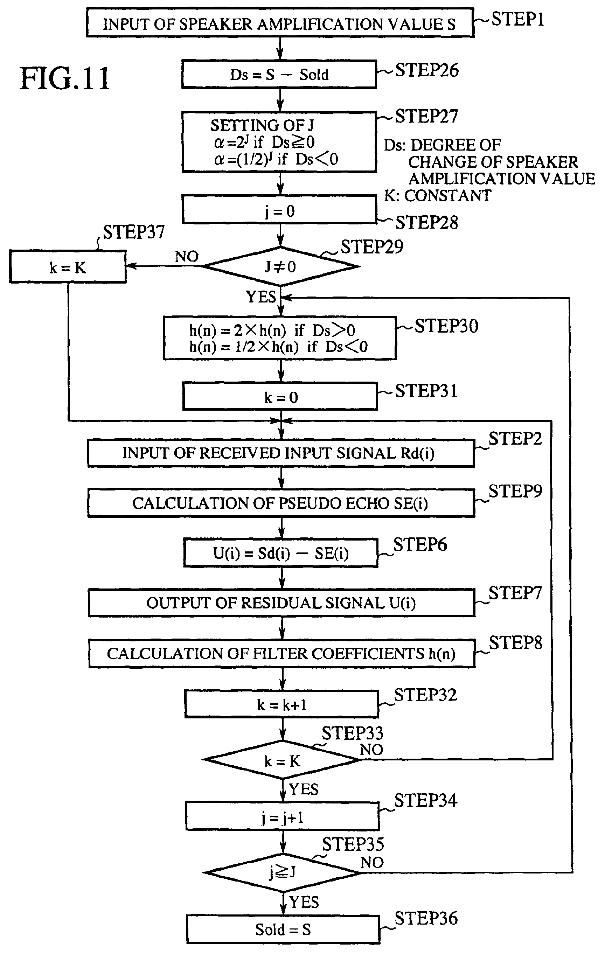

Fig. 11 is a flow chart describing an operation of an echo canceller according to a fifth embodiment of the present invention. In Fig. 11, the step numerals, which are the same as those of Fig. 3, indicate the same steps as (or the steps equivalent to) those of Fig. 3. Hereinafter, the process for multiplying stage by stage the filter coefficients h(n) by the adjustment value $\alpha$ will be described with reference to Fig. 11.

In the same manner as in the other embodiments, when the speaker amplification value S is received in the echo canceller 15 in the step 1, a degree Ds of the change of the speaker amplification value S is calculated by subtracting a past speaker amplification value Sold stored in a memory from the current speaker amplification value S.

Thereafter, a division number J is set in a step 27. The division number J is set in the echo canceller 15 by calculating the value J satisfying a following equation.

$$\alpha=2^J \text{ (if Ds}\geqq 0)$$

$$\alpha=(1/2)^J \text{ (if Ds}<0) \tag{5}$$

Here, as is described in the fourth embodiment, because the adjustment value $\alpha$ corresponding to a degree Ds of the change of the speaker amplification value S is determined, it is preferable that the division number J corresponding to each degree Ds of the change of the speaker amplification value S be set in a memory in advance.

Thereafter, a counter value j is reset in a step 28, and it is judged in a step 29 whether or not the division number J is equal to 0. In case of J=0, the procedure proceeds to a step 37, a counter value k is set to a predetermined constant value K, and the procedure proceeds to the step 2.

In contrast, in cases where it is judged in the step 29 that the division number J is not equal to 0, a stage-by-stage adjustment of the filter coefficients h(n) is performed in a step 30 by using a following equation.

$$h(n) = 2 \times h(n) \text{ (if Ds}>0)$$

$$h(n) = (1/2) \times h(n) \text{ (if Ds}<0) \tag{6}$$

Thereafter, a counter value k is reset to 0 in a step 31, and the echo removal is performed in the step 2 and the steps 6 to 9. The process in each step is performed in the same manner as that in the first embodiment.

Thereafter, the counter value k is incremented by 1 in a step 32, and the echo removal process in the step 2 and the steps 6 to 9 is performed until the counter value k reaches the constant value K (step 33). Therefore, in the echo canceller 15, the echo removal process can be performed K times according to the filter coefficients h(n) which are adjusted by values corresponding to one stage each time the process of the step 30 is performed.

Thereafter, the counter value j is incremented by 1 in a step 34, and it is judged in a step 35 whether or not the counter value j reaches a value equal to or higher than the division number J. In cases where the counter value j does not reach the division number J, the procedure returns to the step 30. Here, because the filter coefficients h(n) are again adjusted in the step 30, the echo removal process can be performed in the echo canceller 15 according to the filter coefficients h (n) adjusted in the J-th stage by repeatedly performing the procedure from the step 30 to the step 35.

In cases where it is judged in the step 35 that the counter value j reaches a value equal to or higher than the division number J, the procedure proceeds to a step 36, and the current speaker amplification value S is stored as a past speaker amplification value Sold in the echo canceller 15. Thereafter, the same processing starting from the step 1 is repeatedly performed.

As is described above, in cases where the change of the speaker amplification value S is large, the filter coefficients h(n) are multiplied by each partial component obtained by dividing the adjustment value $\alpha$ so as to gradually change the filter coefficients h(n). Therefore, as compared with the pseudo echo SE(i) calculated from the filter coefficients h(n) which are obtained by the single multiplication of the adjustment value $\alpha$, the occurrence of a considerably discontinuous change in the pseudo echo SE(i) can be prevented. That is to say, as compared with a case where the filter coefficients h (n) are largely changed in one renewal operation, the calculated pseudo echo SE(i) is smoothly changed, and the echo-cancelled signal U(i) can be smoothly changed. Accordingly, the echo can be removed from the signal Sd(i) by using the pseudo echo SE(i), and no degraded sound can be added to the signal U(i).

Also, proper filter coefficients h(n) corresponding to the change of the speaker amplification value S can be obtained at a comparatively low calculation volume corresponding to the number of multiplications of the filter coefficients h(n) which is equal to the number of the filter coefficients h(n), and a pseudo echo similar to an actual echo can be calculated from the filter coefficients h(n) corresponding to the change of the speaker amplification value S and the received signal Rd(i). Accordingly, the echo can be properly removed from the signal Sd(i).

EMBODIMENT 6

In the voice communication device according to the fifth embodiment, in cases where the speaker amplification value S is largely changed, a divided multiplication of the filter coefficients h(n) by a partial component of the adjustment value $\alpha$ is serially performed several times to substantially perform the multiplication of the filter coefficients h(n) by the adjustment value $\alpha$. However, in cases where a degree of the change of the speaker amplification value S is considerably large (or considerably small), even though a divided multiplication of the filter coefficients h(n) by a partial component of the adjustment value $\alpha$ is serially performed several times to substantially perform the multiplication of the filter coefficients h(n) by the adjustment value $\alpha$, a considerably discontinuous change occurs in the pseudo echo SE (i) calculated from the filter coefficients h(n). As a result, there is probability that a degraded sound is added to the residual signal U(i) not including the echo.

Therefore, in a voice communication device according to a sixth embodiment, in cases where a degree of the change of the speaker amplification value S is larger than a predetermined value, the filter coefficients h(n) are reset to zero. In detail, in cases where the speaker amplification value S is, for example, changed by +24 dB or more (or -24 dB or less) within 0.8 second, the filter coefficients h(n) are once set to zero according to an equation (7). Thereafter, the filter coefficients h(n) are renewed according to the sequential calculation, and the filter coefficients h(n) gradually approach proper values.

$$h(n) = 0 \ (n = 0 \ \text{to N-1}) \qquad (7)$$

Here, in this embodiment, the filter coefficients h(n) are set to zero. However, it is applicable that the filter coefficients h(n) be set to values near to zero on condition that no considerably discontinuous change occurs in the pseudo echo SE(i).

As is described above, in cases where a degree of the change of the speaker amplification value S is considerably large, the filter coefficients h (n) are once set to zero or values near to zero. Therefore, as compared with a case where the filter coefficients h(n) are changed by multiplying each filter coefficient h(n) by a high (or low) adjustment value, the occurrence of a considerably discontinuous change in the pseudo echo SE (i) can be prevented. That is to say, as compared with a case where the filter coefficients h(n) are considerably changed by multiplying the filter coefficients h(n) by a constant value, the calculated pseudo echo SE(i) is smoothly changed, an echo-cancelled signal can be smoothly changed, and no degraded sound can be added to the echo-cancelled signal. Accordingly, in cases where the echo removal is performed by using the pseudo echo SE(i), no degraded sound can be added to the signal U(i).

EMBODIMENT 7

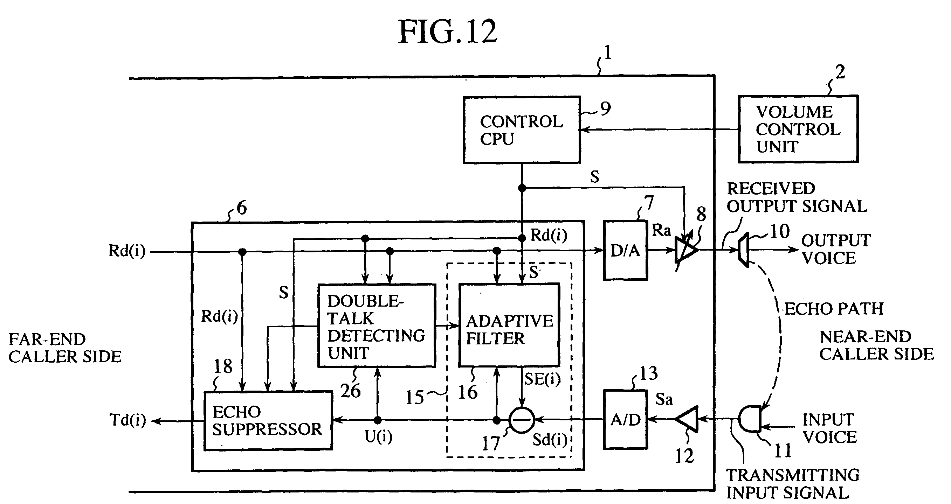

Fig. 12 is a block diagram showing the configuration of an echo processing unit arranged in the voice communication device and the configuration of peripheral units according to a seventh embodiment of the present invention. As shown in Fig. 12, in an echo processing unit of a seventh embodiment, a double talk detecting unit 26 is arranged to detect a simultaneous voice uttering state (or a double talk) in the communication between the far-end caller and the near-end caller and to output a result of the detection to the adaptive filter 16. Here, the configuration other than the adaptive filter 16 is the same as that in the first embodiment, the constituent elements, which are the same as or equivalent to those shown in Fig. 2, are indicated by the same reference numerals as those of the constituent elements shown in Fig. 2, and additional description of those constituent elements is omitted.

The received input signal Rd(i), the signal Sd(i) and the residual signal U(i) are input to the double talk detecting unit 26, and signal powers Rp, Sp and Ep of these signals are calculated.

Also, the speaker amplification value S is received in the double talk detecting unit 26, and a degree of the change of the speaker amplification value S is calculated.

Thereafter, it is checked whether or not each of following equations (8) to (10) is satisfied, and in cases where one of following conditions is satisfied, it is judged in the double talk detecting unit 26 to be a double talk or a far-end caller voiceless state. Thereafter, the result of the judgment is output to the adaptive filter 16 as a double talk judgment result.

$$Rp < P1 \qquad (8)$$

$$Sp > P2 \times Rp \qquad (9)$$

$$Ep > Pv \times Sp \qquad (10)$$

Condition-4: equation (8) is satisfied.

Condition-5: equation (8) is not satisfied, but equation (9) is satisfied.

Condition-6: equation (8) or equation (9) is not satisfied, but equation (10) is satisfied.

Symbols P1 and P2 denote fixed values in the equations (8) and (9). A symbol Pv denotes a weighting factor changing with the speaker amplification value S. In cases where a degree of the change of the speaker amplification value S is, for example, equal to or higher than +12 dB (or equal to or lower than -12 dB), Pv is set to a value (for example, Pv = Pvb + 0.2) which is obtained by adding a constant value to a predetermined reference value Pvb. Therefore, it is difficult to judge that the communication between the far-end caller and the near-end caller is performed in the state of the double talk. Also, in cases where a degree of the change of the speaker amplification value S is lower than +12dB and higher than -12 dB, Pv is set to the reference value Pvb.

In cases where the double talk judgment result indicates the double talk, the renewal of the filter coefficients h(n) is stopped in the adaptive filter 16. In contrast, in cases where the double talk judgment result indicates no double talk, the filter coefficients h (n) are renewed in the adaptive filter 16.

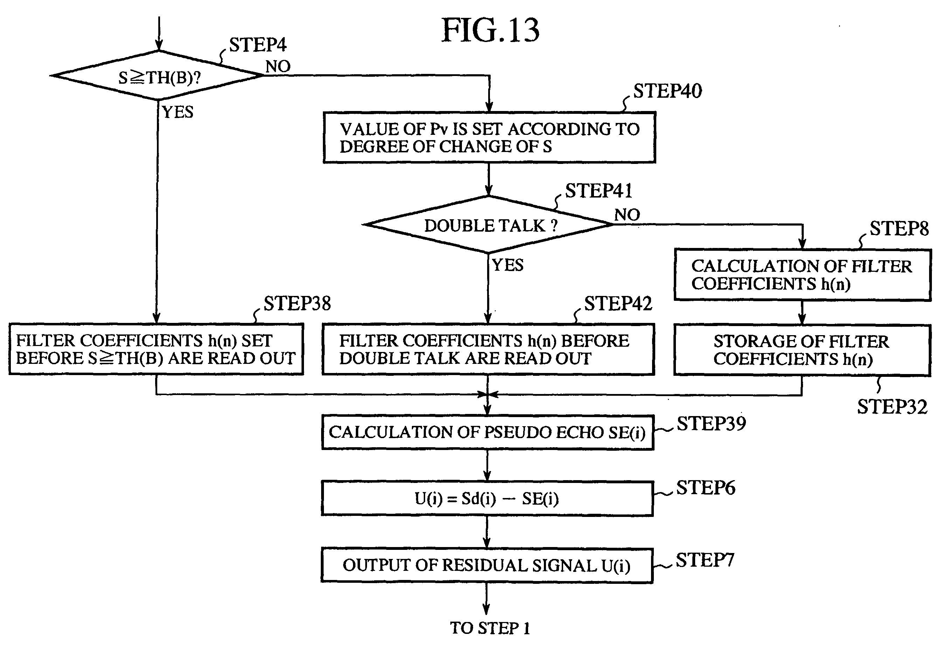

Fig. 13 is a flow chart describing an operation of the echo canceller 15 of the voice communication device according to the seventh embodiment. In Fig. 13, the step numerals, which are the same as those of Fig. 3 or Fig. 8, indicate the same steps as (or the steps equivalent to) those of Fig. 3 or Fig. 8.

In cases where the speaker amplification value S is lower than a prescribed threshold value TH(B) (24 dB) in the step 4 of Fig. 13, the procedure proceeds to a step 40. In the step 40, in cases where a degree of the change of the speaker amplification value S is equal to or higher than +12 dB (or equal to or lower than -12 dB), Pv is set to the value of Pvb + 0.2. Also, in cases where a degree of the change of the speaker amplification value S is lower than +12dB and higher than -12 dB, Pv is set to the reference value Pvb. Thereafter, in a step 41, it is judged according to the equations (8) to (10) and the condition-4 to the condition-6 whether or not the communication between the far-end caller and the near-end caller is performed in the state of the double talk. In cases where it is judged in the step 41 to be the double talk, the procedure proceeds to a step 42, filter coefficients h (n) calculated before the judgment to be the double talk are read out from a memory (not shown). These filter coefficients h(n) are used to calculate a pseudo echo SE(i) in a step 39.

In contrast, in cases where it is judged in the step 41 to be no double talk, the procedure proceeds to the step 8, the filter coefficients h(n) are renewed, the filter coefficients h(n) calculated in the step 8 are stored in the memory in a step 32, and the procedure proceeds to a step 39.

As is described above, in case of the double talk, no filter coefficients h(n) are renewed. Therefore, even though a non-linear distortion occurs in the signal Sd(i) input as an echo so as to degrade the precision of the estimation of the filter coefficients h(n), the echo removal can be continued.

In this embodiment, the renewal stop or start of the filter coefficients h(n) in case of the judgment to be the double talk is applied for the echo canceling process of the third embodiment shown in Fig. 8 as an example. However, the process of the renewal stop is not limited to the echo canceling process of the third embodiment, but the process of stopping the renewal can be applied for the other embodiments in the same manner.

Next, an operation of the echo suppressor 18 will be described.

The double talk judgment result is output from the double talk detecting unit 26 to the echo suppressor 18. In the echo suppressor 18, a degree of the echo suppression in a non-double-talk time period, in which it is judged to be no double talk, is set according to the double talk judgment result so as to be larger than that in a double-talk time period in which it is judged to be the double talk, and the amplitude of the residual signal U (i) in the non-double-talk time period is suppressed more than that in the double-talk time period. Here, as an example, a degree of the echo suppression can be set to 6 dB in the double-talk time period, and a degree of the echo suppression can be set to 24 dB in the non-double-talk time period.

In this embodiment, it is preferable that the received input signal Rd(i) be suppressed according to the double talk judgment result as well as the residual signal U(i).

As is described above, in cases where a degree of the change of the speaker amplification value S is large, the constant value Pv for the power Ep of the residual signal U(i) in the equation (10) of the double talk judgment is changed, and probability of the judgment to be the double talk is lessened. Therefore, even though the echo removal based on the filter coefficients h (n) properly calculated cannot be properly performed due to the large degree of the change of the speaker amplification value S and the power Ep of the residual signal U(i) is enlarged, it is prevented that the renewal of the filter coefficients h(n) is stopped due to the erroneous judgment to be the double talk. Accordingly, the filter coefficients h(n) gradually approach proper values, and the echo can be properly removed.

Also, even though the speaker amplification value S is largely changed, it is prevented that the communication between the far-end caller and the near-end caller is erroneously judged to be the double talk, and the residual signal U(i) is properly suppressed. Therefore, an echo component not removed in the echo canceller 15 can be suppressed.

Here, the use of the echo compressor with the echo canceller is not limited to this embodiment. For example, the echo compressor can be used with the echo canceller described in each of the other embodiments. Also, the echo compressor can be used with each of various conventional types of echo cancellers.

EMBODIMENT 8

Each of the voice communication devices according to the first to seventh embodiments has the echo processing unit 6 which comprises the echo canceller 15, having the adaptive filter 16 and the subtracting unit 17, for performing the echo removal according to the speaker amplification value S output from the control CPU 9, and the echo suppressor 18 for suppressing the output of the echo canceller 15 according to the speaker amplification value S output from the control CPU 9 while changing a degree of the attenuation corresponding to the suppression. However, the operation performed in the echo canceller 15 and the operation performed in the echo suppressor 18 can be performed in a software process. Hereinafter, a voice communication device performing the operation in the echo canceller 15 and the operation in the echo suppressor 18 in a software process will be described.

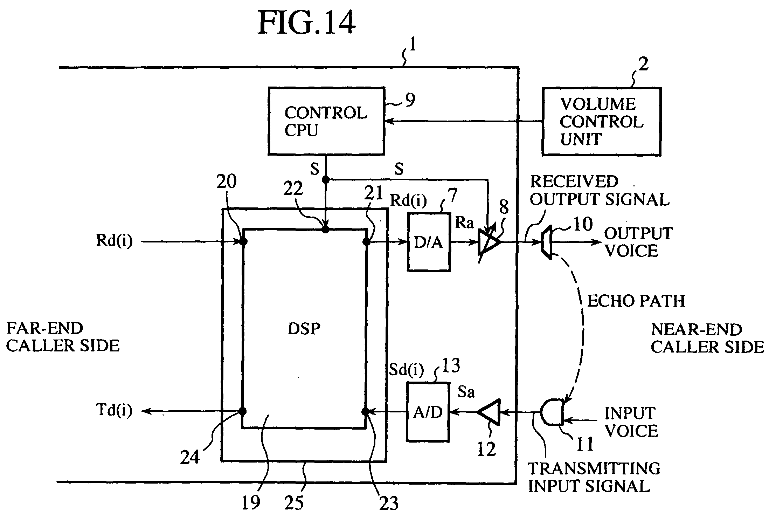

Fig. 14 is a block diagram showing the configuration of a voice communication device according to an eighth embodiment of the present invention. In Fig. 14, 19 indicates an echo reduction processing unit formed of a digital signal processor (hereinafter, called DSP). 20 indicates a received signal input port. 21 indicates a received signal output port. 22 indicates a speaker amplification value input port. 23 indicates a transmitting signal input port. 24 indicates a transmitting signal output port. 25 indicates an echo processing processor. In Fig. 14, the constituent elements, which are the same as or equivalent to those shown in Fig. 2 or Fig. 12, are indicated by the same reference numerals as those of the constituent elements shown in Fig. 2 or Fig. 12, and additional description of those constituent elements is omitted.

The echo processing processor 25 comprises the DSP 19 performing the echo reduction process, the received signal input port 20 at which the received input signal Rd(i) is received, the received signal output port 21 from which the received input signal Rd(i) is output, the speaker amplification value input port 22 at which the speaker amplification value S sent from the control CPU 9 is received, the transmitting signal input port 23 at which voice given by a terminal user is received as a signal Sd(i) through the microphone 11, the microphone amplifier 12 and the A/D converter 13, and the transmitting signal output port 24 from which a transmitting output signal Td(i) obtained by performing the echo canceling process and the echo suppressing process is output.

Next, an operation will be described below. The speaker amplification value S corresponding to the speaker volume adjusted in the volume control unit 2 is output from the control CPU 9 to the DSP 19 through the speaker amplification value input port 22 of the echo processing processor 25. Thereafter, the speaker amplification value S is, for example, read out from the speaker amplification value input port 22 according to a software tool stored in the DSP 19 at prescribed time intervals (for example, every sampling cycle of voice samples). Thereafter, the echo canceling process and the echo suppressing process are performed in the DSP 19 according to the speaker amplification value S read out. The echo canceling process and the echo suppressing process are the same as those described in each of the first to seventh embodiments with reference to Fig. 3 to Fig. 13, and additional description of the echo canceling process and the echo suppressing process is omitted.

As is described above, the voice communication device comprises the echo processing processor 25, functioning as an echo processing unit, for performing the operation, which is performed in both the echo canceller 15 and the echo suppressor 18 shown in each of Fig. 1, Fig. 2 and Fig. 12, in a software process. Therefore, because the echo canceling process and the echo suppressing process are performed according to the speaker amplification value S received from the voice control unit 2 in the voice communication device having the simple configuration, the same effects as those obtained in the voice communication devices of the first to seventh embodiments can be obtained in the voice communication device.

Also, because the echo reduction processing unit 19 is formed of the DSP, the echo canceling process and the echo suppressing process can be flexibly changed according to the change of the speaker amplification value S.

Also, because an echo canceller and an echo suppressor are substantially obtained as a software tool, the operation of the echo canceller and the echo suppressor can be immediately changed according to the change of the speaker amplification value S.

In the above-described voice communication device, the speaker amplification value S is read out from the speaker amplification value input port 22 according to a software tool of the DSP 19 at prescribed time intervals, and the echo canceling process and the echo suppressing process are changed according to the change of the speaker amplification value S. However, when the speaker amplification value S is output from the control CPU 9 to the speaker amplification value input port 22 of the DSP 19, it is preferable that the interruption processing be performed for the DSP 19 so as to change the echo canceling process and the echo suppressing process in response to the interruption processing.

Also, in the above-described voice communication device, only both the echo canceling process and the echo suppressing process are performed in the DSP 19. However, it is preferable that a function for the voice codec process be additionally included in the DSP 19.

Also, in cases where the echo processing processor is arranged in an on-vehicle telephone or a portable telephone, an echo processing function can be easily added to the-vehicle telephone or the portable telephone.

Also, in the above description, an example of the performance of both the echo canceling process and the echo suppressing process according to the speaker amplification value S output from the control CPU 9 is described. However, in the first to eighth embodiments, it is preferable that the speaker amplification value S be detected or received from another unit in place of the reception of the speaker amplification value S from the control CPU 9 to perform both the echo canceling process and the echo suppressing process.

As is described above, a voice communication device of the present invention comprises a control CPU for outputting a speaker amplification value corresponding to volume on a speaker which is adjusted by a terminal user by using a volume control unit, and an echo processing unit for reducing an echo equivalent to output voice, which is obtained by amplifying a received input signal demodulated and voice-decoded according to the speaker amplification value output from the control CPU and outputting the received input signal from the speaker and is mixed with a transmitting input signal input through a microphone, according to the speaker amplification value. Therefore, the echo included in the transmitting voice can be properly reduced according to the speaker amplification value.

Also, the echo processing unit comprises an echo canceller for calculating a pseudo echo from both the received input signal amplified according to a degree of the change of the speaker amplification value and filter coefficients calculated according to an acoustic transmission characteristic between the microphone and the speaker, and removing the echo from the transmitting input signal including the echo by using the pseudo echo. Therefore, a level of an signal input to an adaptive filter, in which the pseudo echo is calculated from the filter coefficients and the amplified received signal, can correctly agree with a level of a signal which is amplified according to the speaker amplification value and is output to the outside, and the pseudo echo similar to an actual echo can be calculated even though the speaker amplification value is changed. Accordingly, the echo can be properly removed.

Also, the echo processing unit comprises an echo canceller for changing filter coefficients, which are calculated according to an acoustic transmission characteristic between the microphone and the speaker, according to a degree of the change of the speaker amplification value, calculating a pseudo echo from both the received input signal and the filter coefficients, and removing the echo from the transmitting input signal including the echo by using the pseudo echo. Accordingly, the echo can be properly removed.

Also, the filter coefficients are changed stage by stage in the echo canceller in a case where the degree of the change of the speaker amplification value is larger than a prescribed degree of the change. Therefore, as compared with a case where the filter coefficients are largely changed at one time, the pseudo echo produced is gradually changed, an echo-canceled signal is gradually changed, and the addition of a degraded sound can be suppressed.

Also, the filter coefficients are set to zero or a value near to zero in the echo canceller in a case where the degree of the change of the speaker amplification value is larger than a prescribed degree of the change. Therefore, the pseudo echo produced is gradually changed, an echo-canceled signal is gradually changed, and the addition of a degraded sound can be suppressed.

Also, the filter coefficients are changed in the echo canceller in a case where the degree of the change of the speaker amplification value is larger than a prescribed degree of the change within a prescribed time period. Therefore, in cases where the speaker amplification value is moderately changed in a time period so as to properly renew the filter coefficients, there is no case where the filter coefficients are erroneously changed, and the echo can be properly removed.

Also, the echo processing unit comprises an echo canceller for calculating a pseudo echo from both the received input signal and the filter coefficients calculated according to an acoustic transmission characteristic between the microphone and the speaker, changing the pseudo echo according to the speaker amplification value, and removing the echo from the transmitting input signal including the echo by using the changed pseudo echo. Therefore, in a case where a non-linear distortion occurs in a signal input to the echo canceller as an echo so as to degrade the precision of the estimation of the filter coefficients, or in a case where a considerably large non-linear distortion occurs in a signal input to the echo canceller as an echo so as to largely degrade the precision of the estimation of the filter coefficients and to add a signal functioning as a degraded sound, the case is detected with higher precision, and the degradation of the estimation precision of the filter coefficients and the addition of a degraded sound can be suppressed.

Also, the pseudo echo is set to zero or a value near to zero in the echo canceller in a case where the speaker amplification value is larger than a prescribed threshold value. Therefore, in a case where a non-linear distortion occurs in a signal input to the echo canceller as an echo so as to degrade the precision of the estimation of the filter coefficients, the addition of a degraded sound can be suppressed.

Also, the pseudo echo is attenuated by a prescribed value in the echo canceller in a case where the speaker amplification value is larger than a prescribed threshold value. Therefore, in a case where a non-linear distortion occurs in a signal input to the echo canceller as an echo so as to degrade the precision of the estimation of the filter coefficients, the addition of a degraded sound can be suppressed.

Also, the pseudo echo, which is calculated according to the filter coefficients calculated before the speaker amplification value becomes larger than a prescribed threshold value, is used in the echo canceller to remove the echo from the transmitting input signal in a case where the speaker amplification value is larger than the prescribed threshold value. Therefore, in a case where a non-linear distortion occurs in a signal input to the echo canceller as an echo so as to degrade the precision of the estimation of the filter coefficients, the addition of a degraded sound can be suppressed.

Also, the echo processing unit comprises a double talk detecting unit for altering a judgment criterion for double talk detection according to a degree of the change of the speaker amplification value and detecting a double talk according to the altered judgment criterion, and an echo canceller for calculating a pseudo echo from filter coefficients calculated according to an acoustic transmission characteristic between the microphone and the speaker, removing the echo from the transmitting input signal including the echo by using the pseudo echo, and performing a renewal stop or a renewal start of the filter coefficients according to a detection result of the double talk detecting unit. Therefore, in a case where a non-linear distortion occurs in a signal input to the echo canceller as an echo so as to degrade the precision of the estimation of the filter coefficients, the echo removal can be continued.

Also, the echo processing unit comprises a double talk detecting unit for altering a judgment criterion for double talk detection according to a degree of the change of the speaker amplification value and detecting a double talk according to the altered judgment criterion, an echo canceller for reducing an echo component of the transmitting input signal by using a pseudo echo and producing a residual signal, and an echo suppressing unit for suppressing the residual signal produced in the echo canceller at an attenuation value which changes according to a detection result of the double talk detecting unit. Therefore, even though the speaker amplification value is largely changed, the renewal stop of the filter coefficients due to an erroneous judgment to be the double talk can be suppressed, and the echo can be properly removed.

Also, the double talk is detected by the double talk detecting unit according to the comparison of a power of the transmitting input signal with a power of the residual signal, and the judgment criterion for double talk detection is altered by the double talk detecting unit by changing a weighting factor, by which the power of the transmitting input signal is multiplied, according to the degree of the change of the speaker amplification value. Therefore, even though the speaker amplification value is largely changed so as to enlarge the power of the residual signal, the renewal stop of the filter coefficients due to an erroneous judgment to be the double talk can be suppressed, and the echo can be properly removed.

Also, the echo processing unit comprises an echo suppressing unit for suppressing the transmitting input signal including the echo at an attenuation value corresponding to the speaker amplification value output from the control CPU. Therefore, even though the echo cannot be sufficiently removed in an echo canceller, a residual echo included in the output of echo canceller can be suppressed in the echo suppressing unit according to the speaker amplification value.

Also, the echo processing unit is formed of a digital signal processor. Therefore, the echo can be properly removed.

An echo processing processor of the present invention comprises a received signal input port for receiving a received input signal including voice information, a speaker amplification value input port for receiving a speaker amplification value corresponding to volume which is adjusted by using a volume control unit, a transmitting signal input port for receiving a transmitting input signal including voice given by a terminal user, and an echo reduction processing unit for performing an echo reduction process in which an echo equivalent to output voice, which is obtained by amplifying the received input signal received in the received signal input port according to the speaker amplification value received in the speaker amplification value input port and outputting the received input signal from a speaker and is mixed with the transmitting input signal received in the transmitting signal input port, is reduced according to the speaker amplification value. Therefore, the echo included in the transmitting voice signal can be properly reduced.

Also, an amplification process for amplifying the received input signal received in the received signal input port according to a degree of the change of the speaker amplification value received in the speaker amplification value input port, a filter coefficient calculating process for calculating the filter coefficients according to an acoustic transmission characteristic between a microphone and the speaker, a pseudo echo calculating process for calculating a pseudo echo from the filter coefficients calculated in the filter coefficient calculating process and the received input signal amplified in the amplification process and an echo canceling process for removing the echo from the received input signal by using the pseudo echo are performed in the echo reduction processing unit. Therefore, the echo included in the transmitting voice signal, which is input to an echo processing processor through the received signal input port, can be properly reduced.

Also, a filter coefficient calculating process for calculating the filter coefficients according to an acoustic transmission characteristic between a microphone and the speaker, a pseudo echo calculating process for changing the filter coefficients calculated in the filter coefficient calculating process according to a degree of the change of the speaker amplification value received in the speaker amplification value input port and calculating a pseudo echo from both the filter coefficients and the received input signal received in the received signal input port and an echo canceling process for removing the echo from the received input signal by using the pseudo echo are performed in the echo reduction processing unit. Therefore, proper filter coefficients corresponding to the change of the speaker amplification value can be obtained, and the echo can be properly removed.

Also, the filter coefficients are changed stage by stage in the pseudo echo calculating process performed in the echo reduction processing unit in a case where the degree of the change of the speaker amplification value is larger than a prescribed degree of the change. Therefore, the produced pseudo echo is changed stage by stage, and the occurrence of a degraded sound can be made difficult.

Also, the filter coefficients are set to zero or a value near to zero in the pseudo echo calculating process performed in the echo reduction processing unit in a case where the degree of the change of the speaker amplification value is larger than a prescribed degree of the change. Therefore, as compared with a case where the filter coefficients are largely changed by multiplying the filter coefficients by a constant value, the produced pseudo echo is smoothly changed, an echo-canceled signal is smoothly changed, and the occurrence of a degraded sound can be prevented.

Also, the filter coefficients are changed in the pseudo echo calculating process performed in the echo reduction processing unit in a case where the degree of the change of the speaker amplification value is larger than a prescribed degree of the change within a prescribed time period. Therefore, in cases where the speaker amplification value is moderately changed in a time period longer than the prescribed time period so as to properly renew the filter coefficients, the change of the filter coefficients to erroneous values can be suppressed, and the echo can be properly removed.

Also, a filter coefficient calculating process for calculating the filter coefficients according to an acoustic transmission characteristic between a microphone and the speaker, a pseudo echo calculating process for calculating a pseudo echo from both the filter coefficients calculated in the filter coefficient calculating process and the received input signal received in the received signal input port and an echo canceling process for changing the pseudo echo calculated in the pseudo echo calculating process according to the speaker amplification value received in the speaker amplification value input port and removing the echo from the received input signal by using the changed pseudo echo are performed in the echo reduction processing unit. Therefore, in a case where a non-linear distortion occurs in a signal input to the echo processing unit as an echo so as to degrade the precision of the estimation of the filter coefficients, or in a case where a considerably large non-linear distortion occurs in a signal input to the echo processing unit as an echo so as to largely degrade the precision of the estimation of the filter coefficients and to add a signal functioning as a degraded sound, the case can be reliably detected, and the degradation of the estimation precision of the filter coefficients and the addition of a degraded sound can be prevented.

Also, the pseudo echo is calculated according to the filter coefficients, which are calculated before the speaker amplification value becomes larger than a prescribed threshold value, in the pseudo echo calculating process performed in the echo reduction processing unit in a case where the speaker amplification value is larger than the prescribed threshold value. Therefore, even though a non-linear distortion occurs in a signal input to the echo canceller as an echo so as to degrade the precision of the estimation of the filter coefficients, the echo removal can be continued.

Also, a double talk detecting process for altering a judgment criterion for double talk detection according to a degree of the change of the speaker amplification value and detecting a double talk according to the altered judgment criterion, a filter coefficient calculating process for calculating the filter coefficients according to an acoustic transmission characteristic between a microphone and the speaker and performing a renewal stop or a renewal start of the filter coefficients according to a double talk judgment result of the double talk detecting process, a pseudo echo calculating process for calculating a pseudo echo from both the filter coefficients calculated in the filter coefficient calculating process and the received input signal received in the received signal input port and an echo canceling process for removing the echo from the received input signal by using the pseudo echo are performed in the echo reduction processing unit. Therefore, even though the speaker amplification value is largely changed, the renewal stop of the filter coefficients due to an erroneous judgment to be the double talk can be prevented, and the echo can be properly removed.

Also, a double talk detecting process for altering a judgment criterion for double talk detection according to a degree of the change of the speaker amplification value and detecting a double talk according to the altered judgment criterion, an echo canceling process for reducing an echo component of the transmitting input signal by using a pseudo echo and producing a residual signal and an echo suppressing process for suppressing the residual signal at an attenuation value which changes according to a detection result of the double talk detecting process are performed in the echo reduction processing unit. Therefore, an erroneous judgment to be the double talk can be prevented, and the residual signal can be properly suppressed. Accordingly, an echo component sufficiently removed in the echo canceling process can be suppressed.

Also, an echo suppressing process for suppressing the transmitting input signal including the echo at an attenuation value corresponding to the speaker amplification value is performed in the echo reduction processing unit. Therefore, even though an echo cannot be sufficiently removed in the echo canceling process, a residual echo included in a signal, for which the echo canceling process is performed, can be suppressed according to the speaker amplification value by performing the echo suppressing process.

INDUSTRIAL APPLICABILITY

As is described above, the voice communication device and the echo processing processor according to the present invention are appropriate for the voice communication, for example, performed in an on-vehicle telephone or a portable telephone.

**Claims**

1. A voice communication device, comprising:

    a control CPU for outputting a speaker amplification value corresponding to volume on a speaker which is adjusted by a terminal user by using a volume control unit; and
    an echo processing unit for reducing an echo equivalent to output voice, which is obtained by amplifying a received input signal demodulated and voice-decoded according to the speaker amplification value output from the control CPU and outputting the received input signal from the speaker and is mixed with a transmitting input signal input through a microphone, according to the speaker amplification value.

2. A voice communication device according to claim 1, wherein the echo processing unit comprises echo canceling means for calculating a pseudo echo from both the received input signal amplified according to a degree of the change of the speaker amplification value and a filter coefficient calculated according to an acoustic transmission characteristic between the microphone and the speaker, and removing the echo from the transmitting input signal including the echo by using the pseudo echo.

3. A voice communication device according to claim 1, wherein the echo processing unit comprises echo canceling means for changing a filter coefficient, which is calculated according to an acoustic transmission characteristic between the microphone and the speaker, according to a degree of the change of the speaker amplification value, calculating a pseudo echo from both the received input signal and the filter coefficient, and removing the echo from the transmitting input signal including the echo by using the pseudo echo.

4. A voice communication device according to claim 3, wherein the filter coefficient is changed stage by stage by the echo canceling means in a case where the degree of the change of the speaker amplification value is larger than a prescribed degree of the change.

5. A voice communication device according to claim 3, wherein the filter coefficient is set to zero or a value near to zero by the echo canceling means in a case where the degree of the change of the speaker amplification value is larger than a prescribed degree of the change.

6. A voice communication device according to claim 3, wherein the filter coefficient is changed by the echo canceling means in a case where the degree of the change of the speaker amplification value is larger than a prescribed degree of the change within a prescribed time period.

7. A voice communication device according to claim 1, wherein the echo processing unit comprises echo canceling means for calculating a pseudo echo from both the received input signal and the filter coefficient calculated according to an acoustic transmission characteristic between the microphone and the speaker, changing the pseudo echo according to the speaker amplification value, and removing the echo from the transmitting input signal including the echo by using the changed pseudo echo.

8. A voice communication device according to claim 2, wherein the pseudo echo is set to zero or a value near to zero by the echo canceling means in a case where the speaker amplification value is larger than a prescribed threshold value.

9. A voice communication device according to claim 2, wherein the pseudo echo is attenuated by a prescribed value by the echo canceling means in a case where the speaker amplification value is larger than a prescribed threshold value.

10. A voice communication device according to claim 2, wherein the pseudo echo, which is calculated according to the filter coefficient calculated before the speaker amplification value becomes larger than a prescribed threshold value, is used by the echo canceling means to remove the echo from the transmitting input signal in a case where the speaker amplification value is larger than the prescribed threshold value.

11. A voice communication device according to claim 1, wherein the echo processing unit comprises double talk detecting means for altering a judgment criterion for double talk detection according to a degree of the change of the speaker amplification value and detecting a double talk according to the altered judgment criterion, and echo canceling means for calculating a pseudo echo from a filter coefficient calculated according to an acoustic transmission characteristic between the microphone and the speaker, removing the echo from the transmitting input signal including the echo by using the pseudo echo, and performing a renewal stop or a renewal start of the filter coefficient according to a detection result of the double talk detecting means.

12. A voice communication device according to claim 1, wherein the echo processing unit comprises double talk detecting means for altering a judgment criterion for double talk detection according to a degree of the change of the speaker amplification value and detecting a double talk according to the altered judgment criterion, echo canceling means for reducing an echo component of the transmitting input signal by using a pseudo echo and producing a residual signal, and echo suppressing means for suppressing the residual signal produced by the echo canceling means at an attenuation value which changes according to a detection result of the double talk detecting means.

13. A voice communication device according to claim 11 or claim 12, wherein the double talk is detected by the double talk detecting means according to the comparison of a power of the transmitting input signal with a power of the residual signal, and the judgment criterion for double talk detection is altered by the double talk detecting means by changing a weighting factor, by which the power of the transmitting input signal is multiplied, according to the degree of the change of the speaker amplification value.

14. A voice communication device according to any of claims 1 to 10, wherein the echo processing unit comprises echo suppressing means for suppressing the transmitting input signal including the echo at an attenuation value corresponding to the speaker amplification value output from the control CPU.

15. A voice communication device according to any of claims 1 to 14, wherein the echo processing unit is formed of a digital signal processor.

16. An echo processing processor, comprising:

a received signal input port for receiving a received input signal including voice information; a speaker amplification value input port for receiving a speaker amplification value corresponding to volume which is adjusted by using a volume control unit; a transmitting signal input port for receiving a transmitting input signal including voice given by a terminal user; and an echo reduction processing unit for performing an echo reduction process in which an echo equivalent to output voice, which is obtained by amplifying the received input signal received in the received signal input port according to the speaker amplification value received in the speaker amplification value input port and outputting the received input signal from a speaker and is mixed with the transmitting input signal received in the transmitting signal input port, is reduced according to the speaker amplification value.

17. An echo processing processor according to claim 16, wherein an amplification process for amplifying the received input signal received in the received signal input port according to a degree of the change of the speaker amplification value received in the speaker amplification value input port, a filter coefficient calculating process for calculating the filter coefficient according to an acoustic transmission characteristic between a microphone and the speaker, a pseudo echo calculating process for calculating a pseudo echo from the filter coefficient calculated in the filter coefficient calculating process and the received input signal amplified in the amplification process and an echo canceling process for removing the echo from the received input signal by using the pseudo echo are performed in the echo reduction processing unit.

18. An echo processing processor according to claim 16, wherein a filter coefficient calculating process for calculating the filter coefficient according to an acoustic transmission characteristic between a microphone and the speaker, a pseudo echo calculating process for changing the filter coefficient calculated in the filter coefficient calculating process according to a degree of the change of the speaker amplification value received in the speaker amplification value input port and calculating a pseudo echo from both the filter coefficient and the received input signal received in the received signal input port and an echo canceling process for removing the echo from the received input signal by using the pseudo echo are performed in the echo reduction processing unit.

19. An echo processing processor according to claim 18, wherein the filter coefficient is changed stage by stage in the pseudo echo calculating process performed in the echo reduction processing unit in a case where the degree of the change of the speaker amplification value is larger than a prescribed degree of the change.

20. An echo processing processor according to claim 18, wherein the filter coefficient is set to zero or a value near to zero in the pseudo echo calculating process performed in the echo reduction processing unit in a case where the degree of the change of the speaker amplification value is larger than a prescribed degree of the change.

21. An echo processing processor according to claim 18, wherein the filter coefficient is changed in the pseudo echo calculating process performed in the echo reduction processing unit in a case where the degree of the change of the speaker amplification value is larger than a prescribed degree of the change within a prescribed time period.

22. An echo processing processor according to claim 16, wherein a filter coefficient calculating process for calculating the filter coefficient according to an acoustic transmission characteristic between a microphone and the speaker, a pseudo echo calculating process for calculating a pseudo echo from both the filter coefficient calculated in the filter coefficient calculating process and the received input signal received in the received signal input port and an echo canceling process for changing the pseudo echo calculated in the pseudo echo calculating process according to the speaker amplification value received in the speaker amplification value input port and removing the echo from the received input signal by using the changed pseudo echo are performed in the echo reduction processing unit.

23. An echo processing processor according to claim 16, wherein the pseudo echo is calculated according to the filter coefficient, which is calculated before the speaker amplification value becomes larger than a prescribed threshold value, in the pseudo echo calculating process performed in the echo reduction processing unit in a case where the speaker amplification value is larger than the prescribed threshold value.

24. An echo processing processor according to claim 16, wherein a double talk detecting process for altering a judgment criterion for double talk detection according to a degree of the change of the speaker amplification value and detecting a double talk according to the altered judgment criterion, a filter coefficient calculating process for calculating the filter coefficient according to an acoustic transmission characteristic between a microphone and the speaker and performing a renewal stop or a renewal start of the filter coefficient according to a double talk judgment result of the double talk detecting process, a pseudo echo calculating process for calculating a pseudo echo from both the filter coefficient calculated in the filter coefficient calculating process and the received input signal received in the received signal input port and an echo canceling process for removing the echo from the received input signal by using the pseudo echo are performed in the echo reduction processing unit.

25. An echo processing processor according to claim 16, wherein a double talk detecting process for altering a judgment criterion for double talk detection according to a degree of the change of the speaker amplification value and detecting a double talk according to the altered judgment criterion, an echo canceling process for reducing an echo component of the transmitting input signal by using a pseudo echo and producing a residual signal and an echo suppressing process for suppressing the residual signal at an attenuation value which changes according to a detection result of the double talk detecting process are performed in the echo reduction processing unit.

**26.** An echo processing processor according to any of claims 16 to 25, wherein an echo suppressing process for suppressing the transmitting input signal including the echo at an attenuation value corresponding to the speaker amplification value is performed in the echo reduction processing unit.

# FIG.1

EP 1 164 712 A1

23

# FIG.2

VOLUME CONTROL UNIT 2

CONTROL CPU 9

1

6

RECEIVED OUTPUT SIGNAL

10 OUTPUT VOICE

ECHO PATH

NEAR-END CALLER SIDE

INPUT VOICE 11

TRANSMITTING INPUT SIGNAL

8

Ra

7 D/A

Sa

12

13 A/D

S

Rd(i)

S

Rd(i)

ADAPTIVE FILTER 16

SE(i)

Sd(i)

17

15

U(i)

18

S

Rd(i)

ECHO SUPPRESSOR

Rd(i)

Td(i)

FAR-END CALLER SIDE

# FIG.3

INPUT OF SPEAKER
AMPLIFICATION VALUE S —— STEP1

INPUT OF RECEIVED
INPUT SIGNAL Rd(i) —— STEP2

AMPLIFICATION OF RECEIVED INPUT SIGNAL Rd(i) —— STEP3
ACCORDING TO A DEGREE OF CHANGE OF SPEAKER
AMPLIFICATION VALUE S

STEP4

$S \geqq TH(B)$?   NO

YES

STEP5

PSEUDO ECHO SE(i)=0

STEP9

CALCULATION OF
PSEUDO ECHO SE(i)

$U(i) = Sd(i) - SE(i)$ —— STEP6

OUTPUT OF RESIDUAL
SIGNAL U(i) —— STEP7

CALCULATION OF FILTER
COEFFICIENTS h(n) —— STEP8

EP 1 164 712 A1

# FIG.4

INPUT OF SPEAKER AMPLIFICATION VALUE S — STEP12

↓

INPUT OF RECEIVED INPUT SIGNAL Rd(i) — STEP13

↓

INPUT OF RESIDUAL SIGNAL U(i) — STEP14

↓

JUDGMENT OF VOICE UTTERING PERIOD OF FAR-END CALLER ACCORDING TO RECEIVED INPUT SIGNAL Rd(i) — STEP15

↓

COMPARISON OF SPEAKER AMPLIFICATION VALUE S WITH THRESHOLD VALUE TH(A) (=18dB) — STEP16

↓

STEP17

$S \geqq TH(A)$? — NO

YES

ENLARGEMENT OF A DEGREE OF ECHO SUPPRESSION — STEP18

DECREASE OF A DEGREE OF ECHO SUPPRESSION — STEP21

↓

SUPPRESSION OF RESIDUAL SIGNAL U(i) — STEP19

↓

OUTPUT OF TRANSMITTING OUTPUT SIGNAL Td(i) — STEP20

26

# FIG.5

```
┌─────────────────────────┐
│ INPUT OF RECEIVED       │ ⌐STEP2
│ INPUT SIGNAL Rd(i)      │
└─────────────────────────┘
             │
             ▼
┌─────────────────────────┐
│ INPUT OF SPEAKER        │ ⌐STEP1
│ AMPLIFICATION VALUE S   │
└─────────────────────────┘
             │
             ▼
┌──────────────────────────────────────────┐
│ AMPLIFICATION OF RECEIVED INPUT SIGNAL Rd(i) │ ⌐STEP3
│ ACCORDING TO A DEGREE OF CHANGE OF SPEAKER   │
│ AMPLIFICATION VALUE S                         │
└──────────────────────────────────────────┘
             │
             ▼
┌──────────────────────────────────────────┐
│ COMPARISON OF SPEAKER AMPLIFICATION VALUE S │ ⌐STEP4
│ WITH THRESHOLD VALUE TH(B) (=24dB)          │
└──────────────────────────────────────────┘
```

STEP4

$S \geqq TH(B)$? — NO

STEP8

CALCULATION OF FILTER COEFFICIENTS h(n)

YES

STEP5

PSEUDO ECHO SE(i)=0

STEP9

CALCULATION OF PSEUDO ECHO SE(i)

STEP6

$U(i) = Sd(i)$

STEP6

$U(i) = Sd(i) - SE(i)$

STEP7

OUTPUT OF RESIDUAL SIGNAL U(i)

# FIG.6

STEP4

$S \geqq TH(B)?$

NO

YES

STEP23

CALCULATION OF
PSEUDO ECHO SE(i)

STEP9

CALCULATION OF
PSEUDO ECHO SE(i)

STEP24

ATTENUATION OF PSEUDO ECHO SE(i),
$SE(i) = \beta * SE(i)$ $(0 < \beta < 1)$

STEP25

$U(i) = Sd(i) - SE(i)$

STEP7

OUTPUT OF RESIDUAL
SIGNAL U(i)

STEP8

CALCULATION OF FILTER
COEFFICIENTS h(n)

# FIG.7

TO STEP 4 OF FIG. 5

STEP4

$S \geqq TH(B)?$ —— NO —→ TO STEP 8 OF FIG. 5

YES

CALCULATION OF FILTER COEFFICIENTS h(n) — STEP8

CALCULATION OF PSEUDO ECHO SE(i) — STEP23

ATTENUATION OF PSEUDO ECHO SE(i), SE(i)= $\beta$ *SE(i) (0< $\beta$ <1) — STEP24

U(i) = Sd(i) — SE(i) — STEP25

OUTPUT OF RESIDUAL SIGNAL U(i) — STEP7

# FIG.8

STEP4

$S \geqq TH(B)$?

NO

YES

STEP38

FILTER COEFFICIENTS h(n) SET
BEFORE $S \geqq TH(B)$ ARE READ OUT

STEP39

CALCULATION OF
PSEUDO ECHO SE(i)

STEP9

CALCULATION OF
PSEUDO ECHO SE(i)

$U(i) = Sd(i) - SE(i)$    STEP6

OUTPUT OF RESIDUAL
SIGNAL U(i)    STEP7

CALCULATION OF FILTER
COEFFICIENTS h(n)    STEP8

# FIG.9

TO STEP 4 OF FIG. 5

STEP4

$S \geqq TH(B)?$ — NO → TO STEP 8 OF FIG. 5

YES

FILTER COEFFICIENTS h(n) SET
BEFORE $S \geqq TH(B)$ ARE READ OUT — STEP38

CALCULATION OF
PSEUDO ECHO SE(i) — STEP39

$U(i) = Sd(i) - SE(i)$ — STEP6

OUTPUT OF RESIDUAL
SIGNAL U(i) — STEP7

# FIG.10

```
┌─────────────────────────┐
│   INPUT OF SPEAKER      │ ⌇STEP1
│  AMPLIFICATION VALUE S  │
└─────────────────────────┘
            │
            ▼
┌─────────────────────────┐
│   INPUT OF RECEIVED     │ ⌇STEP2
│   INPUT SIGNAL Rd(i)    │
└─────────────────────────┘
            │
            │                          STEP22
            ▼
┌────────────────────────────────────────────────┐
│ ADJUSTMENT OF FILTER COEFFICIENTS h(n)          │
│ ACCORDING TO SPEAKER AMPLIFICATION VALUE S      │
└────────────────────────────────────────────────┘
            │
            ▼
┌─────────────────────────┐
│    CALCULATION OF       │ ⌇STEP9
│    PSEUDO ECHO SE(i)    │
└─────────────────────────┘
            │
            ▼
┌─────────────────────────┐
│   U(i) = Sd(i) — SE(i)  │ ⌇STEP6
└─────────────────────────┘
            │
            ▼
┌─────────────────────────┐
│   OUTPUT OF RESIDUAL    │ ⌇STEP7
│     SIGNAL U(i)         │
└─────────────────────────┘
            │
            ▼
┌─────────────────────────┐
│ CALCULATION OF FILTER   │ ⌇STEP8
│   COEFFICIENTS h(n)     │
└─────────────────────────┘
```

FIG.11

INPUT OF SPEAKER AMPLIFICATION VALUE S ~STEP1

$Ds = S - Sold$ ~STEP26

SETTING OF J
$\alpha = 2^J$ if $Ds \geqq 0$
$\alpha = (1/2)^J$ if $Ds < 0$ ~STEP27

Ds: DEGREE OF
CHANGE OF SPEAKER
AMPLIFICATION VALUE
K: CONSTANT

$j = 0$ ~STEP28

STEP37

$k = K$

NO ← $J \neq 0$ ~STEP29

YES

$h(n) = 2 \times h(n)$ if $Ds > 0$
$h(n) = 1/2 \times h(n)$ if $Ds < 0$ ~STEP30

$k = 0$ ~STEP31

INPUT OF RECEIVED INPUT SIGNAL Rd(i) ~STEP2

CALCULATION OF PSEUDO ECHO SE(i) ~STEP9

$U(i) = Sd(i) - SE(i)$ ~STEP6

OUTPUT OF RESIDUAL SIGNAL U(i) ~STEP7

CALCULATION OF FILTER COEFFICIENTS h(n) ~STEP8

$k = k+1$ ~STEP32

STEP33
NO
$k = K$

YES

$j = j+1$ ~STEP34

STEP35
NO
$j \geqq J$

YES

$Sold = S$ ~STEP36

33

# FIG.12

EP 1 164 712 A1

# FIG.13

STEP4

S≧TH(B)?  —NO→

YES

VALUE OF Pv IS SET ACCORDING TO
DEGREE OF CHANGE OF S  — STEP40

DOUBLE TALK ?  —NO→  STEP41

YES

CALCULATION OF FILTER
COEFFICIENTS h(n)  — STEP8

FILTER COEFFICIENTS h(n) SET
BEFORE S≧TH(B) ARE READ OUT  — STEP38

FILTER COEFFICIENTS h(n) BEFORE
DOUBLE TALK ARE READ OUT  — STEP42

STORAGE OF FILTER
COEFFICIENTS h(n)

STEP32

CALCULATION OF PSEUDO ECHO SE(i)  — STEP39

$U(i) = Sd(i) - SE(i)$  — STEP6

OUTPUT OF RESIDUAL SIGNAL U(i)  — STEP7

TO STEP 1

EP 1 164 712 A1

# FIG.14

CONTROL CPU 9

VOLUME CONTROL UNIT 2

1

2

S

S

20

22

21 Rd(i) 7

8

RECEIVED OUTPUT SIGNAL

Rd(i)

Ra

D/A

10 OUTPUT VOICE

FAR-END CALLER SIDE

DSP

ECHO PATH

NEAR-END CALLER SIDE

Sd(i) 13

Td(i)

A/D

Sa

12

INPUT VOICE

11

24

TRANSMITTING INPUT SIGNAL

19  25  23

EP 1 164 712 A1

# FIG.15

EP 1 164 712 A1

FIG.16

## FIG.17

(a)    Rd(i)

(b)    Sd(i)

# INTERNATIONAL SEARCH REPORT

| International application No. |
|---|
| PCT/JP00/08863 |

**A. CLASSIFICATION OF SUBJECT MATTER**
Int.Cl$^7$ H04B3/23, H04M1/60

According to International Patent Classification (IPC) or to both national classification and IPC

**B. FIELDS SEARCHED**

Minimum documentation searched (classification system followed by classification symbols)
Int.Cl$^7$ H04B3/23, H04M1/60

Documentation searched other than minimum documentation to the extent that such documents are included in the fields searched
Jitsuyo Shinan Koho        1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP, 2-209027, A (Fujitsu Limited),<br>20 August, 1990 (20.08.90),<br>Full text   (Family: none) | 1,7,16,22<br>15<br>2-6,8-14,<br>17-21,23-26 |
| Y | JP, 8-340281, A (Toshiba Corporation),<br>24 December, 1996 (24.12.96),<br>Column 2, lines 24 to 27   (Family: none) | 15 |
| A | JP, 2-55429, A (NEC Corporation),<br>23 February, 1990 (23.02.90),<br>Full text   (Family: none) | 1-26 |
| A | JP, 62-269451, A (NEC Corporation),<br>21 November, 1987 (21.11.87),<br>Full text   (Family: none) | 1-26 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 February, 2001 (14.02.01) | Date of mailing of the international search report<br>27 February, 2001 (27.02.01) |
|---|---|
| Name and mailing address of the ISA/<br>Japanese Patent Office | Authorized officer |
| Facsimile No. | Telephone No. |

Form PCT/ISA/210 (second sheet) (July 1992)

40